(19) Europäisches Patentamt
European Patent Office
Office européen des brevets

(11) EP 0 599 663 B1

(12) EUROPEAN PATENT SPECIFICATION

(45) Date of publication and mention
of the grant of the patent:
25.08.1999 Bulletin 1999/34

(51) Int Cl.⁶: **H04N 9/83**, G06F 1/03

(21) Application number: 93309492.2

(22) Date of filing: 29.11.1993

(54) **Chrominance signal processing**

Chrominanzsignalverarbeitung

Traitement de signal de chrominance

(84) Designated Contracting States:
DE FR GB

(30) Priority: 27.11.1992 KR 9222571

(43) Date of publication of application:
01.06.1994 Bulletin 1994/22

(73) Proprietor: SAMSUNG ELECTRONICS CO., LTD.
Suwon-city, Kyungki-do 441-373 (KR)

(72) Inventor: **Kim, Yong-je**
**Suwon-city, Kyungki-do (KR)**

(74) Representative: **Stanley, David William et al**
**APPLEYARD LEES & CO.**
**15 Clare Road**
**Halifax**
**West Yorkshire HX1 2HY (GB)**

(56) References cited:
EP-A- 0 312 370          EP-A- 0 486 851
GB-A- 2 148 061          US-A- 5 062 004

## Description

The present invention relates to chrominance signal processing as may be performed in, for example, a video tape recorder.

Embodiments of low-band converting chrominance signal processing apparatus according to the present invention can be adapted to standard recording systems (e.g. an eight millimetre system, a VHS system, or a Beta system) in which the low-band converted chrominance signal is directly recorded. Here, for the convenience of the explanation, the eight millimetre system will be taken as an example.

Generally, a video recorder records a luminance signal using a low-carrier FM recording method and a chrominance signal using a low-band-conversion direct-recording method. Such signal recording systems are explained as follows.

Video signals are separated into luminance signals and chrominance signals. The separated luminance signal is converted into an FM-modulated wave of a low carrier. Here, to select the frequency of the carrier corresponding to the white peak of the white level of a video signal and to the sync tip of a synchronizing signal is important in relation to a signal-to-noise ratio (S/N). The difference between the carrier's frequencies corresponding to the white peak of the white level and to the sync tip of the synchronization signal is a frequency deviation which should be kept as large as possible to get a favourable S/N ratio, taking other conditions into account. This is because the frequency deviation is proportional to the amplitude of the output signal after being demodulated. In the eight millimetre system, the white peak of the white level is 5.4MHz and the sync tip of the synchronization signal is 4.2MHz; the frequency deviation is therefore 1.2MHz. In the case of the VHS system, the white peak of the white level is 4.4MHz and the sync tip of the synchronization signal is 3.4MHz, respectively, and in the case of the Beta system, the white peak of the white level is 4.8MHz and the sync tip of the synchronization signal is 3.6MHz, respectively.

The FM modulation characteristics in a video recorder are such that, even if the transmission zone of a magnetic tape and a video head system is narrow, a complete recording can be accomplished therein, and that even if the contact state of the magnetic tape and the video head is somewhat poor, the recording quality is still not unacceptably degraded.

On the other hand, a chrominance signal whose frequency corresponds to 3.58MHz ± 500Khz in an NTSC system is converted into a signal whose frequency is 743Khz (629Khz in the VHS system and 688Khz in the Beta system) - that is lower than that of a luminance signal - and the chrominance signal is recorded directly according to AM modulation. The signal converted into a lower band with respect to the luminance signal is referred to as a low-band converted chrominance signal. Also, the chrominance subcarrier which converts the signal into a low band is referred to as a low-band converting chrominance subcarrier.

The chrominance signal must be forced to be converted into a signal having a low frequency so that the recording zone is used effectively. Also, since the chrominance signal itself is a phase-modulated wave, it is affected by jitter due to the running imbalance between the magnetic tape and the video head system. Therefore, if the chrominance signal is converted into a signal having a low frequency, the phase-shifting depending on the same amount of the jitter is reduced so that chrominance variation can be prevented or reduced.

The low-band converted chrominance signal is incorporated with a low-carrier FM signal of the luminance signals, and the incorporated signal is supplied to the video head system and recorded on the magnetic tape. Here, the low-carrier FM signal performs an alternating-current bias with respect to the low-band converted chrominance signal, so that no-bias recording can be achieved in the video signal recording. Also, when the recorded signal is reproduced, the signal is converted in reverse to the recording of signal, to restore the original signal.

In a conventional device for forming a low-band converted chrominance signal, an oscillating signal having a frequency Fscu (a low-band converting chrominance subcarrier whose frequency is 47.25Fh in the NTSC system and 46⅞Fh in the PAL system, where Fh is the frequency of an horizontal-synchronizing signal) output from an automatic frequency controller (AFC) by using a voltage controlled oscillator (VCO) and an oscillating signal having a frequency Fs (a chrominance subcarrier whose frequency is 455/2 Fh in the NTSC system and 284 - ¼ + 1/625 Fh in the PAL system) output from a local oscillator (VXO usually employed because of its good stability) are incorporated together at a subconverter which produces an incorporated signal of Fs+Fscu. Thereafter, the incorporated signal of Fs+Fscu is further incorporated in the main convertor with the Y/C-divided chrominance signal, that is, the chrominance signal modulated by Fs, which therefore produces a low-band converted chrominance signal.

Accordingly, it is necessary for the conventional low-band converted chrominance signal generating device to have both the VCO used in the AFC circuit and the local oscillator.

Moreover, since the chrominance subcarrier and the low-band converting chrominance subcarrier in the NTSC and PAL systems do not have an integer multiplier for each other, there is a problem in that a dual-standard NTSC/PAL video recorder needs a separate VOS and VXO for each system.

US-A-5,062,004 (Winterer) discloses a digital video signal processing circuit for a video cassette recorder that automatically regulates the frequencies of the mixing signals for both a first baseband mixer and a second baseband mixer using line stepping signals obtained from a horizontal line sweep generator to eliminate phase errors and quadrature errors in the chrominance signal, but the mixing signals are generated by two separate oscillators.

Preferred embodiments of the present invention aim to provide an improved low-band converting chrominance signal processing apparatus for use in NTSC/PAL video recorders in which chrominance signals in the NTSC system and in the PAL system are processed using a common oscillating signal.

It is another aim to provide a method for forming a low-band converting chrominance subcarrier, using a common oscillating signal.

It is still another aim to provide a device for forming the low-band converting chrominance subcarrier, using a common oscillating signal.

According to a first aspect of the present invention there is provided low-band converting chrominance signal processing apparatus which receives a chrominance signal modulated by a chrominance subcarrier to produce a chrominance signal modulated by a low-band converting chrominance subcarrier, the apparatus comprising:

a chrominance subcarrier generator for generating a chrominance subcarrier; a chrominance demodulator for demodulating the chrominance signal modulated by said chrominance subcarrier, using said chrominance subcarrier; a chrominance processor for processing the demodulated chrominance signal from said chrominance demodulator; a low-band converting chrominance subcarrier generator for generating a low-band converting chrominance subcarrier; and a chrominance modulator for receiving the chrominance signal processed by said chrominance processor (30) and said low-band converting chrominance subcarrier thereby to produce the chrominance signal modulated by said low-band converting chrominance subcarrier;

characterised in that said apparatus further comprises:

an automatic frequency control circuit (20) for generating an oscillating signal having a predetermined frequency; said chrominance subcarrier generator (24) receiving said oscillating signal to produce said chrominance subcarrier; and said low-band converting chrominance subcarrier generator (34) receiving said oscillating signal thereby to produce said low-band converting chrominance subcarrier.

Preferably, in said chrominance signal processing apparatus: said chrominance demodulator demodulates the chrominance signal modulated by said chrominance subcarrier using said chrominance subcarrier, or demodulates the chrominance signal modulated by said low-band converting chrominance subcarrier using said low-band converting chrominance subcarrier; said chrominance modulator modulates the chrominance signal processed by said chrominance processor, using said low-band converting chrominance subcarrier or said chrominance subcarrier; said apparatus further comprising: a first switch for selecting one of said chrominance subcarrier and said low-band converting chrominance subcarrier for supply to said chrominance demodulator; and a second switch for selecting one of said low-band converting chrominance subcarrier and said chrominance subcarrier for supply to said chrominance modulator.

Preferably, said low-band converting chrominance subcarrier generator comprises: a ROM for generating the low-band converting chrominance subcarrier, storing therein the values which are equally sampled from the basic waveform of the low-band converting chrominance subcarrier into a frequency Fs of the oscillating signal corresponding to one period of a horizontal scanning line in the sampled order; and an address generator for generating a read-address of said ROM, which is repetitively recovered a number of times of the frequency Fscu of the low-band converting chrominance subcarrier corresponding to the period of said one horizontal scanning line per the oscillating signal.

Preferably, said ROM for generating the low-band converting chrominance subcarrier stores the values sampled when 0° to 90° of the basic wave form of said low-band converting chrominance subcarrier are sampled a number Fs/4 of times.

Preferably, said address generator comprises: an accumulator for accumulating therein Fscu/Fs per oscillation signal; and an address collator for converting the output of said accumulator into an address suitable for said ROM for generating the low-band converting chrominance subcarrier.

Preferably, in use, said result of Fscu/Fs is divided into a quotient and a remainder and the remainder is divided into a numerator and a denominator, and said accumulator comprises: a first constant generator for generating said numerator; a second constant generator for generating said quotient; a first adder for adding the numerator produced by said first constant generator to a feedback value produced by a first modulo calculator per oscillating signal; said first modulo calculator performing a modulo operation on the output of said first adder using said denominator, thereby to supply a carry value for a second adder and feedback the remainder to said first adder; said second adder adding the quotient produced by said second constant generator to the carry value produced by said first modulo calculator; and a third adder for adding the output of said second adder to the remainder of a second modulo calculator; said second modulo calculator performing a modulo calculation on the output of said third adder by using the value Fs thereby to supply the remainder as an address for said third adder and said address collator.

Preferably, in use, the basic wave form of said low-band converting chrominance subcarrier is divided into four domains in which the first domain occupies from zero to 90°, the second domain occupies from 91° to 180°, the third domain occupies from 181° to 270°, and the fourth domain occupies from 271° to 360°, and: said address collator outputs the accumulated value as the read-address in the case that the remainder of said second modulo calculator belongs to the first domain; said address collator outputs the complement value of Fs/4 as the read-address in the case that the remainder thereof belongs to the second domain; said address collator outputs the value subtracted by Fs/2 as the read-address in the case that the remainder thereof belongs to the third domain; and said address collator outputs the complement value of Fs/2 in the case that the remainder thereof belongs to the fourth domain: said address collator outputting a sine value having inverted bits in the first and second domains and a sine value having inverted bits in the third and fourth domains.

Preferably, said low-band converting chrominance subcarrier generator comprises: an output portion for producing values which are sampled from Fscu low-band converting chrominance subcarriers at Fs sampling points each having a uniform interval, according to a relation between frequency Fscu of a chrominance subcarrier and frequency Fs of an oscillating signal which correspond to the period of one horizontal scanning line; an address generator for repetitively counting the oscillating signals per period of one horizontal scanning line thereby to form a read-address to be supplied for a look-up table; and a domain determinator.

Preferably, said address generator comprises: a first modulo counter for counting said oscillating signal with a modulo value of Fs; an address inverter for complementing the counted value of said first modulo counter by Fs to produce the result; and a first multiplexer for selectively producing the output of said first modulo counter or the output of said address inverter according to a first domain signal applied to a selecting input terminal thereof.

Preferably, said domain determinator comprises: a second modulo counter for counting a horizontal synchronizing signal with modulo value 4; and a decoder for receiving the output of said second modulo counter thereby to produce a first domain signal having inverted bits in the period of a horizontal scanning line, and a second domain signal having inverted bits during the period of first and second horizontal scanning lines and during the period of third and fourth horizontal scanning lines, where the starting address in the period of the first horizontal scanning line is identical to position 0° of a low-band converting chrominance subcarrier.

Preferably, said output portion comprises: a ROM for generating the low-band converting chrominance subcarrier, storing the values which are sampled of Fscu low-band converting chrominance subcarriers at Fs sampling points each having a uniform interval, in sampled order according to the relation to frequency Fscu of the low-band converting chrominance subcarrier and frequency Fs of the low-band converted chrominance corresponding to the period of an horizontal scanning line; an inverter for inverting the output of said ROM for generating the low-band converting chrominance subcarrier; and a second multiplexer for selectively producing the output of said ROM for generating the low-band converting chrominance subcarrier or the output of said inverter according to a domain signal applied to a selecting input terminal thereof.

According to a further aspect of the present invention, there is provided a method of forming a low-band converting chrominance subcarrier using an oscillating signal having a predetermined frequency, for use in the above apparatus which includes: a first step for determining a frequency Fscu of the low-band converting chrominance subcarrier and the frequency Fs of the oscillating signal corresponding to the period of one horizontal scanning line, and sampling the basic waveform of the low-band chrominance subcarrier at Fs sampling points each having a uniform interval to be stored in a form of a look-up table; a second step for producing read-addresses for said look-up table to be read Fscu times per Fs oscillating signals; and a third step for producing sampled values corresponding to said read-address from said look-up table, whereby Fscu chrominance subcarriers are formed per Fs oscillating signals.

Preferably, in the first step, said look-up table stores the values which are sampled from said low-band chrominance subcarrier from 0° to 90° Fs/4 times.

Preferably, in the second step, each Fscu/Fs is accumulated per oscillating signal and thereby the read-address is formed.

Preferably, an integer operation is performed with respect to the accumulated values so as to produce the read-address.

Preferably, the basic wave form of said low-band converting chrominance subcarrier is divided into four domains, in which the first domain occupies from 0° to 90°, the second domain occupies from 91° to 180°, the third domain occupies from 181° to 270°, and the fourth domain occupies from 271° to 360° ; when said accumulated value belongs to the first domain, said second step provides said accumulated value as the read-address; when said accumulated value belongs to the second domain, said second step provides the complement value of Fs/4; when said accumulated value belongs to the third domain, said second step provides the value subtracted by Fs/2; and when said accumulated value belongs to the fourth domain, said second step provides the complement value of Fs/2.

Preferably, the basic wave form of said low-band converting chrominance subcarrier is divided into four domains, in which the first domain occupies from 0° to 90°, the second domain occupies from 91° to 180°, the third domain occupies from 181° to 270°, and the fourth domain occupies from 271° to 360°, said third step provides the value recovered from said look-up table for the first and the second domains, and the value recovered from said look-up table and inverted for the third and the fourth domains.

According to another aspect of the present invention, there is provided a method of processing a low-band converted chrominance signal, for use in the above apparatus, comprising: a first step of determining a frequency Fscu of a low-band converting chrominance subcarrier and a frequency Fs of an oscillating signal corresponding to a the period of one horizontal scanning line, and sampling the basic wave form of the low-band converted chrominance signal at Fs sampling points each having a uniform interval, to be stored in a form of a look-up table; a second step of producing a read-address for said look-up table to be read Fscu times per Fs oscillating signals; and a third step for producing a sampled value corresponding to said read-address from said look-up table, whereby Fscu low-band converting chrominance subcarriers are provided per Fs oscillating signals.

According to another aspect of the present invention, there is provided a method of forming a low-band converting chrominance subcarrier using an oscillating signal having a predetermined frequency, for use in the above apparatus comprising: a first step of determining a frequency Fscu of the low-band converting chrominance subcarrier and a frequency Fs of the oscillating signal corresponding to a period of one horizontal scanning line, and sampling Fscu low-band converted chrominance signals at Fs sampling points each having a uniform interval thereby to be stored in the form of a look-up table; a second step for repetitively counting the oscillating signal per period of one horizontal scanning line to form a read-address which is supplied to said look-up table; and a third step for producing a sampled value corresponding to said read-address from said look-up table, whereby Fscu low-band converting chrominance subcarriers are formed per Fs oscillating signals.

Preferably, said second step forms the address in an order that the address of a present period of horizontal scanning line is reversely designated to that of the previous period of horizontal scanning line.

Preferably, a starting address in the period of a first horizontal scanning line is located on position 0° of the low-band converting chrominance subcarrier, and said third step repetitively provides the value read in said look-up table during the period of the first and the second horizontal scanning lines, and the value read in said look-up table and having an inverted sign during the period of the third and the fourth horizontal scanning lines.

The invention extends to a video signal processing device and/or a video tape recorder, provided with an apparatus, or adapted to perform a method, according to any of the preceding aspects of the invention.

For a better understanding of the invention, and to show how embodiments of the same may be carried into effect, reference will now be made, by way of example, to the accompanying diagrammatic drawings, in which:

Figure 1 is a block diagram showing one example of a low-band conversion signal processing apparatus in a video recorder;

Figure 2 is a block diagram illustrating an embodiment of a low-band conversion chrominance signal processing apparatus according to the present invention;

Figure 3 is a block diagram illustrating another embodiment of a low-band conversion chrominance signal processing apparatus according to the present invention;

Figure 4 is a block diagram showing an embodiment of a low-band converting chrominance subcarrier generator illustrated in Figures 2 and 3;

Figure 5 is a graph showing examples of values stored in a ROM for generating the low-band converting chrominance subcarrier illustrated in Figure 4;

Figure 6 is a waveform showing the relation of a horizontal synchronization signal, a low-band converting chrominance subcarrier and an oscillating signal in the NTSC system;

Figure 7 is a block diagram illustrating another embodiment of the low-band converting chrominance subcarrier generator illustrated in Figures 2 and 3; and

Figure 8 is a waveform showing the relation of a horizontal synchronization signal, a low-band converting chrominance subcarrier and an oscillating signal in the PAL system.

In the figures, like reference numerals denote like or corresponding parts.

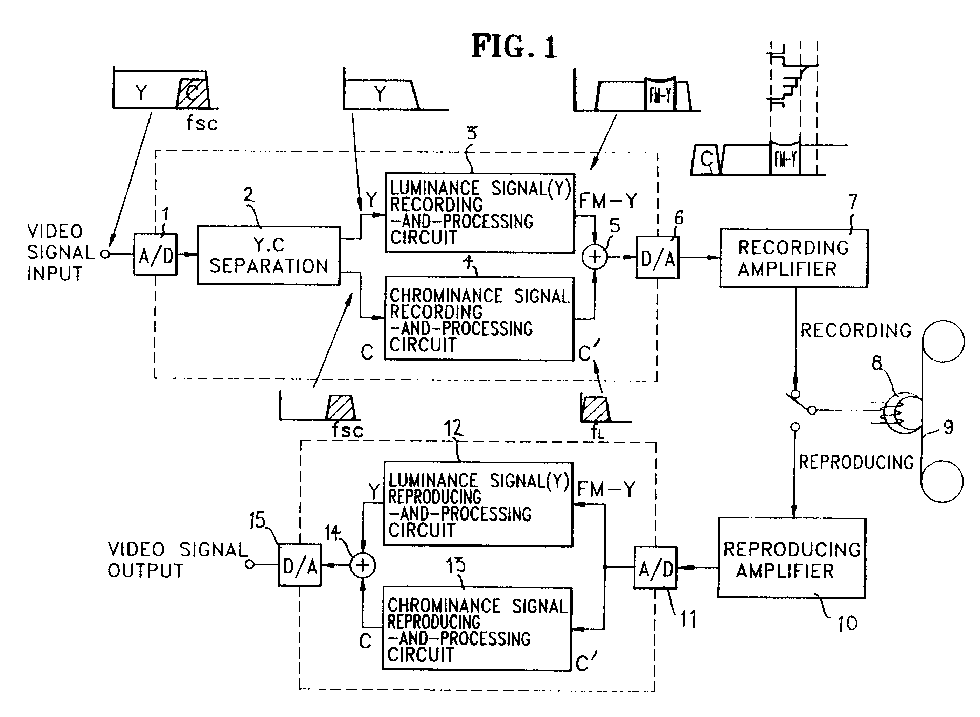

Figure 1 is a block diagram illustrating signal processing in a video recorder, and more particularly, it shows an example of digital processing. The device illustrated in Figure 1 includes an A/D converting circuit 1 for converting a composite video signal into a digital signal; a luminance/chrominance (Y/C) separating circuit 2; a Y signal recording-and-processing circuit 3 which performs a non-linear emphasis, an emphasis, a clip and an FM modulation; a chrominance signal recording-and-processing circuit 4 for frequency-converting the chrominance signal into a lower frequency band; a mixer 5 for superposing an FM-modulated luminance signal FM-Y on a low-band converted chrominance signal C'; a D/A converter 6; a recording amplifier 7; and a recording/reproducing head 8.

On the other hand, a recorded signal played back from a tape 9 is transmitted through the recording/ reproducing head 8, a reproducing amplifier 10, an A/D converter 11 for converting a pickup signal into a digital signal, a luminance signal (Y) reproducing-and-processing circuit 12 for reproducing the luminance signal from FM-modulated luminance signal FM-Y, a chrominance signal (C) reproducing-and-processing circuit 13 for reproducing the chrominance signal from the low-band converted chrominance signal C', a mixer 14 for mixing the reproduced luminance signal Y with the reproduced chrominance signal C, and a D/A converter 15, so that the composite video signal is reproduced. Examples of the invention may be embodied in systems as illustrated in Figure 1.

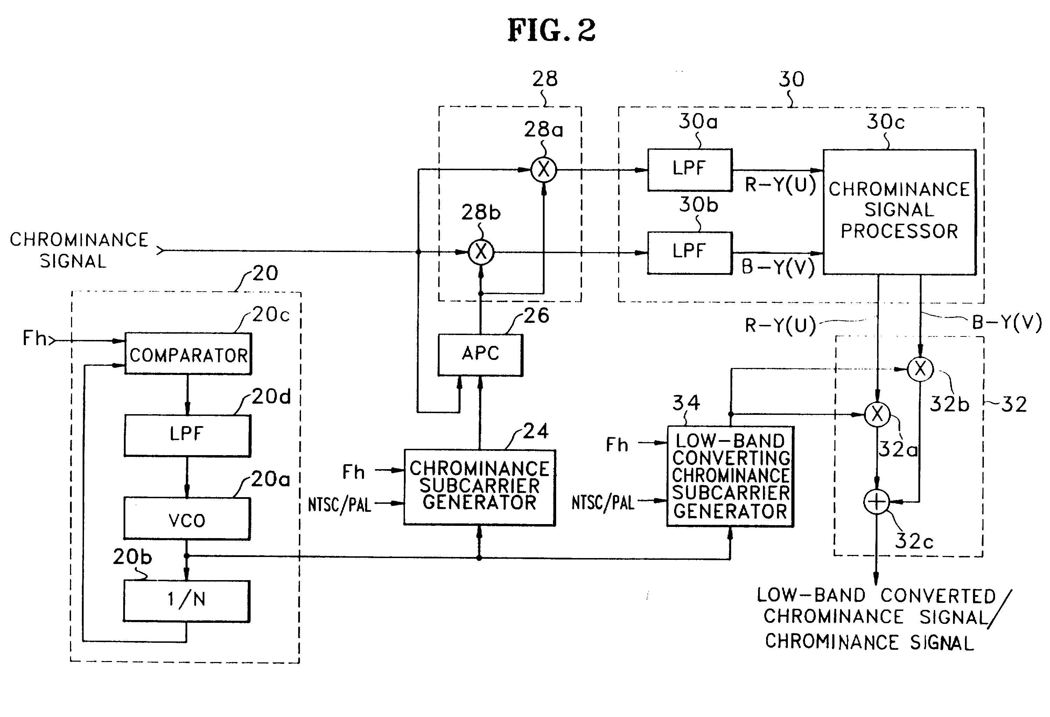

Figure 2 is a block diagram showing one example of a circuit for processing a low-band converted chrominance signal, according to one embodiment of the present invention, wherein a chrominance signal incorporated in a composite video signal is converted into a low-band chrominance signal. In accordance with this embodiment (and other embodiments) of the present invention, it is generally well-known in the art to modulate a chrominance signal modulated by a chrominance subcarrier so as to reproduce the chrominance signal, or to perform the reverse function thereof, or to perform phase inversion of a low-band converting chrominance subcarrier and phase shifting thereof in order to reduce cross-talk in recording a signal on a tape. Therefore, such techniques are not described here in detail.

Referring to Figure 2, the low-band converting chrominance signal processing apparatus includes an AFC 20, a chrominance subcarrier generator 24, an automatic phase control (APC) circuit 26, a chrominance demodulator 28, a chrominance processor 30, a low-band converting modulator 32 and a low-band converting chrominance subcarrier generator 34.

AFC 20 includes a voltage controlled oscillator (VCO) 20a, a 1/N frequency demultiplier 20b, a comparator 20c and a low-band filter 20d.

VCO 20a controls an oscillating frequency according to the voltage applied thereto. VCO 20a of the present example generates a frequency of 27MHz, which is the common frequency in the NTSC system and the PAL system in a numeral 601 advised by the International Radio Consultative Committee. The oscillated output of VCO 20a is demultiplied by 1/N frequency demultiplier 20b to be supplied to an input terminal of comparator 20c. Here, a demultiplier N of 1/N frequency demultiplier 20b is 1716 in the NTSC system and 1728 in the PAL system.

On the other hand, a horizontal synchronizing signal Fh separated by a synchronizing separator (not shown) is supplied to the other input terminal of comparator 20c. Comparator 20c detects the phase difference between signals each applied to one of the two input terminals thereof, thereby to produce a voltage corresponding to the phase difference, which is an error voltage. The error voltage is smoothed in low-pass filter 20d to feed back to VCO 20a, and then controls the frequency of the VCO signal.

The oscillating signal produced in VCO 20a of AFC 20 is supplied as a clock signal to the A/D converter 1 (Figure 1) for sampling the composite video signal, and at the same time, it is supplied as a clock signal to chrominance subcarrier generator 24 and low-band converting chrominance subcarrier generator 34.

Chrominance subcarrier generator 24 receives the oscillating signal provided for from AFC 20, thereby to form a chrominance subcarrier to be supplied to APC circuit 26.

APC circuit 26 controls the chrominance subcarrier from chrominance subcarrier generator 24 so that the phase of the chrominance subcarrier is equal to that of the burst signal among the composite video signals, thereby to supply the phase-controlling chrominance subcarrier for chrominance demodulator 28.

Chrominance demodulator 28 demodulates the chrominance signal included in the composite video signal using the chrominance subcarrier produced in chrominance subcarrier generator 24, so as to supply the demodulated chrominance signal to chrominance processor 30. Chrominance demodulator 28 includes modulators 28a and 28b.

Chrominance processor 30 includes low-band filters 30a and 30b for low-band-filtering colour difference signals R-Y and B-Y (U/V in the PAL system) supplied from modulators 28a and 28b, and a chrominance signal processor 30c for receiving the low-band-filtered colour difference signal and controlling its level thereby to be output to the chrominance signal demodulator 32.

Chrominance modulator 32 includes modulators 32a and 32b and a mixer 32c, while it modulates the colour difference signal provided from chrominance signal processor 30c according to the low-band converting chrominance subcarrier provided from low-band converting chrominance subcarrier generator 34, so as to produce the low-band converted chrominance signal.

Low-band converting chrominance subcarrier generator 34 receives the oscillating signal supplied from AFC 20 and forms the low-band converting chrominance subcarrier to be supplied to chrominance modulator 32.

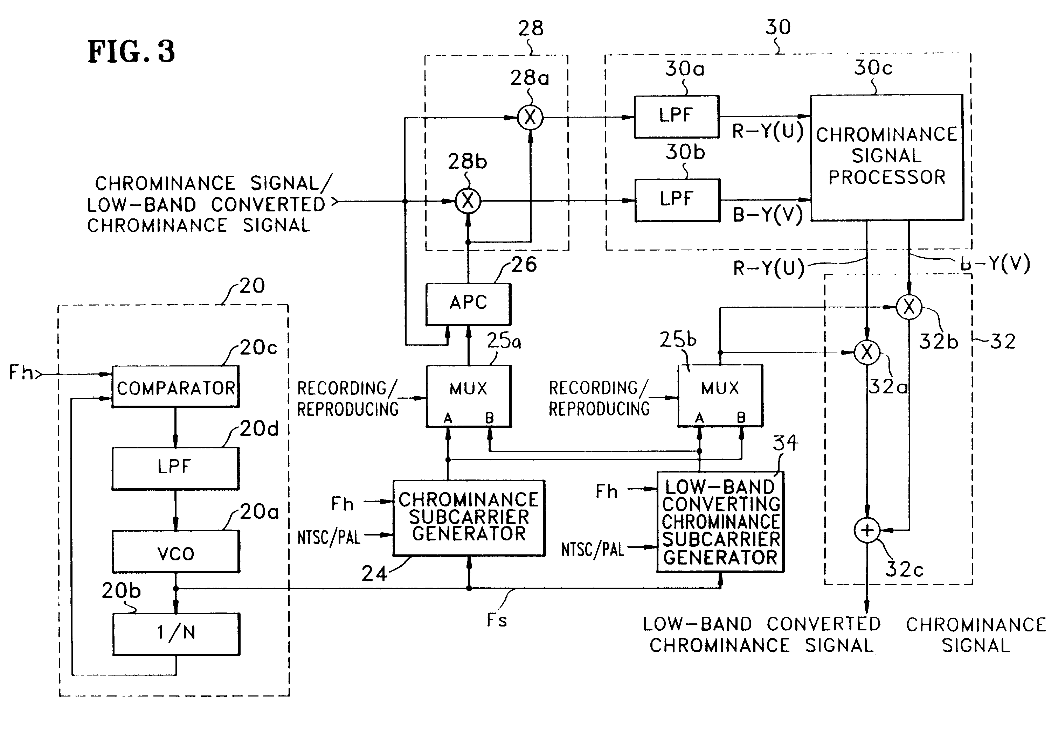

Figure 3 shows another embodiment of chrominance signal processing apparatus according to the present invention, in which a chrominance signal is converted into a low band or its reverse is performed. Referring to Figure 3, like components are denoted by the same reference numerals and a detailed description thereof is not repeated. The device illustrated in Figure 3 further includes switch circuits 25a and 25b.

When a chrominance signal is converted into a low-band, that is, in the case of recording, first switch circuit 25a selects the chrominance subcarrier produced from chrominance subcarrier generator 24 to supply the selected subcarrier to chrominance demodulator 28, and second switch circuit 25b selects the low-band converting chrominance subcarrier produced in low-band converting chrominance subcarrier generator 34 to supply the selected subcarrier to chrominance modulator 32. As a result, the chrominance signal included in the composite video signal is converted into low-band.

When a low-band converted chrominance signal is converted into a chrominance signal, that is, in the case of reproduction, the first switch circuit 25a selects the low-band converting chrominance subcarrier produced by low-band converting chrominance subcarrier generator 34 to supply the selected subcarrier to chrominance demodulator 28, and the second switch circuit 25b selects the chrominance subcarrier produced by chrominance subcarrier generator 24 to supply the selected subcarrier to chrominance modulator 32. As a result, the low-band converted chrominance signal is demodulated into an original chrominance signal.

Now, the operations of chrominance subcarrier generator 24 and low-band converting chrominance subcarrier generator 34 will be described in more detail. The method for forming the low-band converting chrominance subcarrier and the device thereof can be adopted wherever the chrominance subcarrier is produced, by the same principle.

In a video recorder of an eight millimetre or a high-band system, the frequency of the low-band converting chrominance subcarrier, i.e. Fscun in the NTSC system or Fscup in the PAL system is represented as follows, where the horizontal synchronizing frequency is expressed as Fh.

$$Fscun = 47.25Fh$$

$$= 47.25 \times 1000/1011 \times 15{,}750Hz$$

$$= 743.444Khz \qquad (1)$$

$$Fscup = 46.875Fh$$

$$= 46.875 \times 15{,}625Hz$$

$$= 732.4218Khz \qquad (2)$$

Frequencies of the low-band converting chrominance subcarriers, Fscun and Fscup, are synchronized by horizontal synchronizing frequency Fh. However, as shown in Equations 1 and 2, the frequency of the low-band converting chrominance subcarrier is not produced as an integer with respect to the horizontal frequency, so that it is difficult to form the low-band converting chrominance subcarrier.

Also, the relation between frequency Fs of the oscillating signal (858Fh in the NTSC system and 864Fh in the PAL system) and the frequency Fscu of the low-band converting chrominance subcarrier is as follows:

In the NTSC system,

$$Fscun/Fs = Ts/Tscun$$

$$= 47.25Fh/858Fh \qquad (3)$$

$$= 63/1144 \qquad (4)$$

In the PAL system,

$$Fscup/Fs = Ts/Tscup$$

$$= 46.875Fh/864Fh \qquad (5)$$

$$= 125/2304 \qquad (6)$$

Wherein, Ts means the period of the A/D converted frequency, and Tscun means the period of low-band converting chrominance subcarrier in the NTSC system, and Tscup means the period of low-band converting chrominance subcarrier in the PAL system.

Namely, Fs and the low-band converting chrominance subcarrier should have a relation as in Equations 4 and 6. However, it is very difficult to realize the relation using a logic circuit, e.g. a counter or like device.

A method for forming the low-band converting chrominance subcarrier according to one example of the present invention is described as follows.

Firstly, a frequency M of the low-band converting chrominance subcarrier and a frequency N of the VCO signal corresponding to one horizontal frequency are determined, and M low-band converting chrominance subcarriers are sampled at N sampling points each having a uniform interval so as to be stored in a look-up table.

Secondly, the VCO signal is counted thereby to produce the read-address supplied to the look-up table.

Thirdly, the sampled value corresponding to the read-address is recovered from the look-up table, so that M low-band converting chrominance subcarriers are produced every N oscillating signals.

According to this example of a method for forming the low-band converting chrominance subcarrier, Equations 4 or 6 are substituted into the equation of the power of two.

In the NTSC system, the denominator 1144 in Equation 4 is replaced by 2048, that is $2^{11}$, the numerator 63 changes to 112×(112/143). In the same way in the PAL system, if denominator 2304 in Equation 6 is replaced by 2048, the numerator 125 becomes 112×(16/144).

That is, in case of the NTSC system, during 2048 periods of the oscillating signal, $112\times(112/143)$ periods of the low-band converting chrominance subcarrier are produced. In other words, when a period of the low-band converting chrominance subcarrier is sampled into 2048 sampling points, the VCO signal is produced every $112\times(112/143)$ sampling points.

Accordingly, a sine wave corresponding to one period of the low-band converting chrominance subcarrier is sampled at 2048 sampling points, and the sampled values are stored in a memory device, such as a read only memory (ROM), in a sequential order. Then, read-addresses are made to increase by $111\times(112/143)$ per one period of the VCO signal, so that the low-band converting chrominance subcarrier is acquired which is exactly synchronized with the horizontal synchronizing frequency.

Since the read-address is quantized as $112\times(112/143)$, the difference between the real address and the read-address, that is, an error, is generated in terms of less than one. However, if quantized address $112\times(112/143)$ is accumulated each period of the oscillating signal and only the quotient of the accumulated value is taken, the error can be removed. Also, the error value appears regularly so that it can be ignored in a real-time application.

As for a sine wave, with only a quarter period thereof, the remaining three quarters of the period of the sine waveform can be reconstructed. That is, when the sine wave form is divided into four periods where one period is 90°, the wave form of the second quarter is read reversely with respect to that of the first quarter, and the waveforms of the third and fourth quarters are read with those of the first and second quarters; however, the signs of third and fourth quarters are reversed. Accordingly, if only one quarter of the sine wave form is stored in the memory space, the complete wave form can be sufficiently produced, so that memory space can be saved.

Since the sine waveform is sampled into 2048 sampled values, 512 samples are performed every quarter period. In this case, the number of sampling is even, so that the sampled interval is formed to be uniform, in order that the values corresponding to 0° and 90° may be not sampled. This is to prevent an error from being generated in reading the waveform reversely.

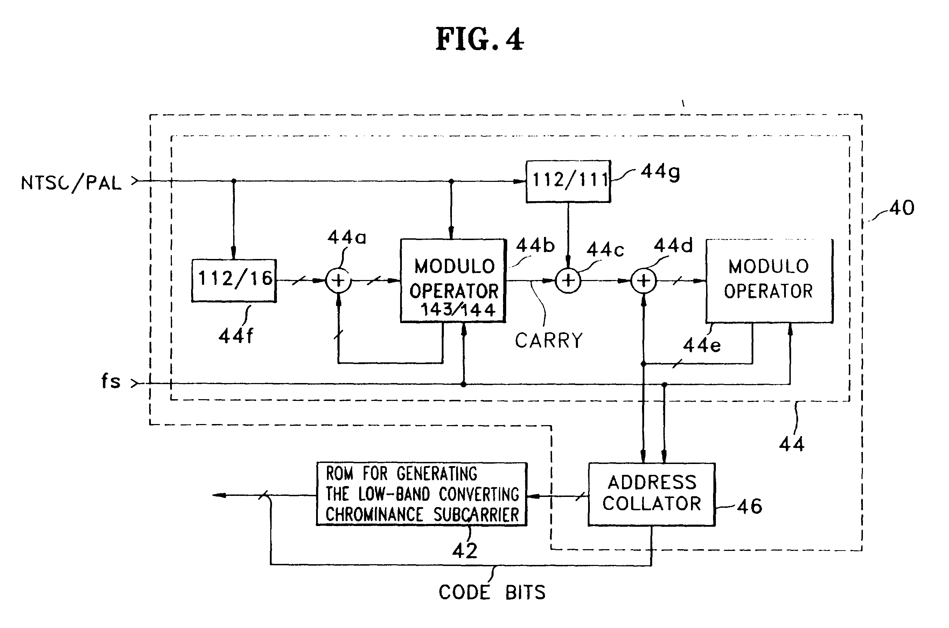

Figure 4 is a block diagram illustrating an embodiment of low-band converting chrominance subcarrier generator 34 shown in Figures 2 and 3. Referring to Figure 4, the low-band converting chrominance subcarrier generator 34 includes an address generator 40 and ROM 42 for generating a low-band converting chrominance subcarrier.

Address generator 40 includes an accumulator 44 having a first adder 44a, a first modulo calculator 44b, a second adder 44c, a third adder 44d, a second modulo calculator 44e and constant generators 44f and 44g;

and an address collator 46.

With such components illustrated in Figure 4, the operation for forming the low-band converting chrominance subcarrier is described in case of the NTSC system.

First adder 44a and first modulo calculator 44b perform the remainder in Equation 4, that is, 112/143. A numerator 112 produced in constant generator 44f is applied to one input terminal of first adder 44a, and the feedback value in first modulo calculator 44b is applied to the other input terminal thereof. Herein, constant generator 44f produces a constant 112 in the NTSC system and 16 in the PAL system.

First adder 44a adds numerator 112 applied to one input terminal thereof and the feedback value in first modulo calculator 44b applied to the other input terminal thereof, to produce the result in first modulo calculator 44b. First modulo calculator 44b tests each received value, whenever the oscillating signal is applied to its clock terminal, so that in the case that the detected value is more than the predetermined modulo value, the first modulo calculator produces a carry value to supply it to the first output terminal, and also subtracts the modulo value from each received value to supply the result as a feedback value for the second output terminal. Here, the modulo value in first modulo calculator 44b is a denominator 143 of the remnant term of Equation 3 (in the PAL system, 144), and the oscillating signal is applied as a clock signal therein.

The carry value in first modulo calculator 44b is applied to one input terminal of second adder 44c, and quotient 112 in constant generator 44g is applied to the other input terminal thereof. Here, constant generator 44g produces a constant 112 in the NTSC system and 111 in the PAL system.

Second adder 44c adds the carry value in first modulo calculator 44b applied to its one input terminal and quotient 112 of Equation 3 applied to the other input terminal thereof, to output the result to third adder 44d.

Third adder 44d and second modulo calculator 44e perform the address operation. The output in second adder 44c is applied to one input terminal of third adder 44d, and the feedback value from second modulo calculator 44e is applied to the other input terminal thereof. Third adder 44d adds the output value from second adder 44c and the feedback value from second modulo calculator 44e, to output the result to second modulo calculator 44e. Second modulo calculator 44e tests every received value whenever the oscillating signal is applied to its clock terminal, to subtract the modulo value from the received value, so that second modulo calculator 44e outputs the result as a feedback value and simultaneously supplies the result to address collator 46. Here, the modulo value in second modulo calculator 44e is a sampling number, that is, 2048, and the VCO signal is applied as a clock signal.

Address collator 46 receives the address value from second modulo calculator 44e and produces a read-address suitable for ROM 42 for generating the low-band converting chrominance subcarrier and a code value.

ROM 42 for generating the low-band converting chrominance subcarrier stores the sampled values of a quarter period of a sine wave form. ROM 42 for generating the low-band converting chrominance subcarrier reads the value in the memory location corresponding to the received the read-address, so as to produce the result. The output from ROM 42 for generating the low-band converting chrominance subcarrier is synthesized with the code value in address collator 46, so that the sampled value is obtained which corresponds to the address value in second modulo calculator 44e.

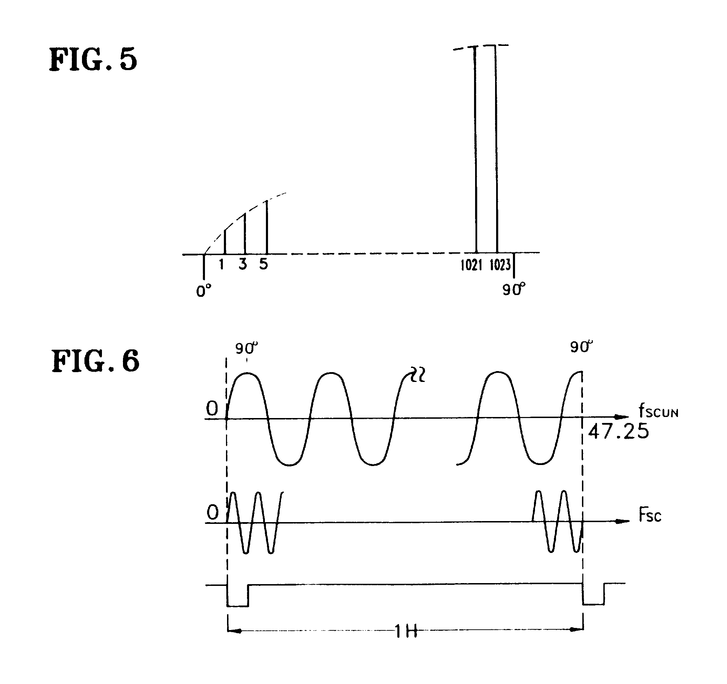

Figure 5 is a graph showing the values stored in the ROM for generating the low-band converting chrominance subcarrier illustrated in Figure 4. When a quarter period of the sine wave is sampled into 512 samples which are to be read inversely, an end-effect is generated in that the reading of the values corresponding to 0° and 90° continues for one more value. In this case, if a quarter period of the sine wave is sampled into 1024 samples and the odd-numbered values are selected among the sampled values, the values corresponding to 0° and 90° are not sampled. Consequently, the end-effect can be removed.

As for address collator 46, if the received address value corresponds to the first quarter period, the received address value is produced, and if the address value corresponds to the second quarter period, it is subtracted from the final address value (1024), so that the result is produced. Also, if the address values corresponding to the third period and the last period are received, the address values corresponding to the first period and the second period respectively are produced, whose signs are reversed. Such an operation is performed repeatedly every period of the sine wave.

Another feature of this example of a method for forming the low-band converting chrominance subcarrier relates to sharing of the horizontal synchronizing frequency Fh.

In the NTSC system, common denominator Fh in Equation 3 corresponds to the case where the number of oscillating signals is 858 and the number of low-band converting chrominance subcarriers is 47.25. That is, when 47.25 low-band converting chrominance subcarriers are sampled into 858 sampled values, the oscillating signal is forced to be produced per 0.0550699 (47.25/858) period.

Accordingly, the sine wave corresponding to 47.25 periods of the low-band converting chrominance subcarrier is sampled into 858 sampled points, and then the sampled points are stored in the serial address order in a memory device, e.g., ROM, and the read-address is made to increase one by one every period of the oscillating signal and to be read, so that the low-band converting chrominance subcarrier is obtained, which is perfectly synchronized to the horizontal synchronizing frequency.

According to the operation of the components illustrated in Figure 4, in the PAL system, the value applied to one input terminal of first adder 44a of address generator 40 is the numerator of the remainder term in Equation 6, which is 16, and the modulo value of first modulo calculator 44b is the denominator of the remainder term in Equation 6, which is 114, and the value applied to one input terminal of second adder 44c is the quotient of Equation 6, which is 11.

Figure 6 is a waveform illustrating the relation of horizontal synchronizing signal Fh, the low-band converting chrominance subcarrier and the oscillating signal in the NTSC system. As illustrated in Figure 6, 47.25 low-band converting chrominance subcarriers appear repeatedly within one period of the horizontal synchronizing signal (hereinafter referred to as 1H), and the end point thereof is equal to a quarter period of a low-band converting chrominance subcarrier, that is, 90°. Therefore, during the second 1H period, the values in the look-up table are read in the reverse order, and during the third 1H, the values in the look-up table are read in the original order and their sine values are reversed, and during the last 1H, the values are read in the same manner as the second 1H, whose sine values are reversed. Such an operation is performed repeatedly every 4H period.

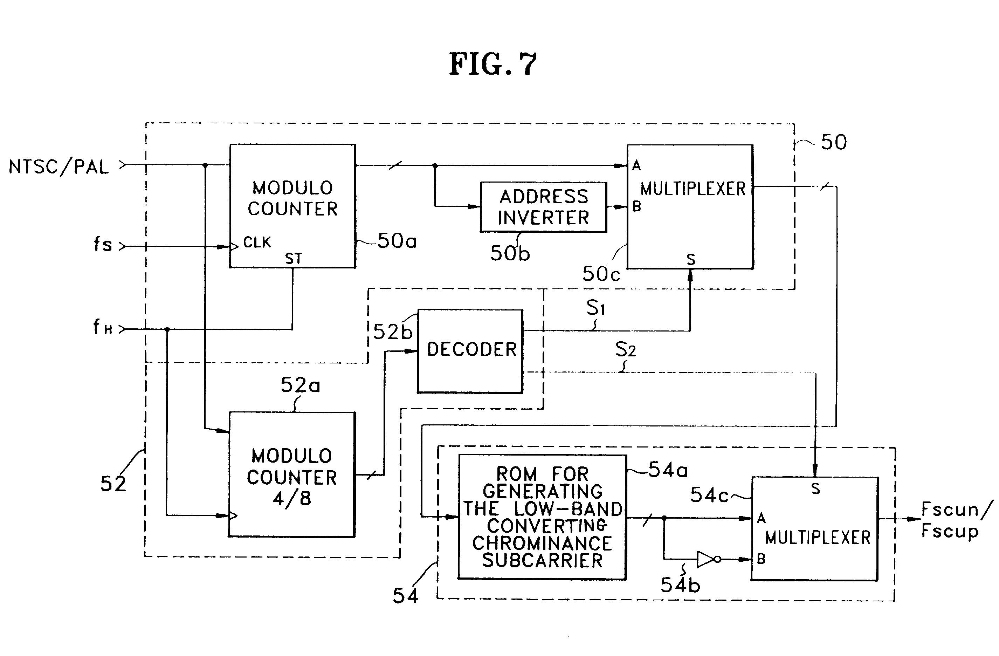

Figure 7 is a block diagram showing still another example of a device for forming the low-band converting chrominance subcarrier according to an embodiment of present invention. Referring to Figure 7, the device includes an address generator 50, a domain determinator 52, and an output portion 54.

Address generator 50 includes a first modulo counter 50a, an address inverter 50b, and a first multiplexer 50c. First modulo counter 50a performs a modulo 858 operation in the NTSC system and a modulo 864 operation in the PAL system.

Domain determinator 52 includes a second modulo counter 52a and a decoder 52b. Second modulo counter 52a performs a modulo 4 operation in the NTSC system and a modulo 8 operation in the PAL system.

Output portion 54 includes a ROM 54a for generating the low-band converting chrominance subcarrier, an inverter 54b and a second multiplexer 54c.

Hereinbelow, the operation of the components illustrated in Figure 7 is explained in the case of the NTSC system. The oscillating signal produced by AFC 20 illustrated in Figure 2 is applied to the clock terminal of first modulo counter 50a of address generator 50, and horizontal synchronizing signal Fh is applied to the reset terminal thereof. First modulo counter 50a counts the received oscillating signal and supplies the counted value for address inverter 50b and one input terminal of first multiplexer 50c. When the counted value amounts to the modulo value, the first modulo counter 50a starts to count from the reset value, again. Here, the modulo value is 858. First modulo counter 50a is reset in the leading edge of the horizontal synchronizing signal applied to the reset terminal.

In address inverter 50b, the received value therein becomes the complement value for the modulo value of the first modulo counter, to be applied to the other input terminal of first multiplexer 50c. The output of first modulo counter 50a is applied to one input terminal of first multiplexer 50c, and the output of address inverter 50b is applied to the other input terminal of the first multiplexer. First multiplexer 50c responsive to the selected signal applied to the selecting input terminal thereof selects the output of first modulo counter 50a applied to one input terminal thereof or the output of address inverter 50b applied to the other input terminal thereof, so that the selected output is supplied for output portion 54.

A first domain signal $S_1$ in domain determinator 52 is applied to the selecting input terminal of first multiplexer 50c. Horizontal synchronizing signal Fh is applied to the clock terminal of second modulo counter 52a of domain determinator 52. Second modulo counter 50b counts the received oscillating signal therein to supply the result to decoder 52b, and when the counted value amounts to the modulo value, the second modulo counter starts the counting from the reset value again. Here, the modulo value is 4.

Decoder 52b receives the counted result in second modulo counter 52a, to produce first domain signal $S_1$ assigning the first and second horizontal synchronizing signals, and second domain signal $S_2$ assigning the third and fourth horizontal synchronizing signals. The first domain signal $S_1$ is applied to the selecting input terminal of first multiplexer 50c in address generator 50, and the second domain signal $S_2$ is applied to the selecting input terminal of second multiplexer 54c of output portion 54.

The output signal of first multiplexer 50c is transmitted, as a read-address, to ROM 54a for generating the low-band converting chrominance subcarrier in output portion 54. ROM 54a for generating the low-band converting chrominance subcarrier reads the memory location corresponding to the received read-address therein, to supply the restored value to one input terminal of second multiplexer 54c and to inverter 54b.

Inverter 54b inverts the received value therein to supply the inverted value to the other input terminal of second multiplexer 54c.

The output in ROM 54a for generating the low-band converting chrominance subcarrier is applied to one input terminal of second multiplexer 54c, and the output of inverter 54b is applied to the other input terminal of second multiplexer 54c. Second multiplexer 54c responsive to the signal applied to its selecting input terminal selects either the output of ROM 54a for generating the low-band converting chrominance subcarrier which is applied to one input terminal of the second multiplexer, or the output of inverter 54b which is applied to the other input terminal thereof, and then produces the selected output. The selecting input terminal in second multiplexer 54c receives second domain signal $S_2$ of decoder 52b.

Referring to the operation of the components illustrated in Figure 7, the structure of the look-up table in ROM 54a for generating the low-band converting chrominance subcarrier in the PAL system is somewhat different from that in the NTSC system, but the overall operation thereof is similar. That is, as shown in Equation 5, one period (1H) of the horizontal synchronizing signal corresponds to 864 oscillating signals and 46.875 low-band converting chrominance subcarriers, and accordingly, the sampled state varies with it.

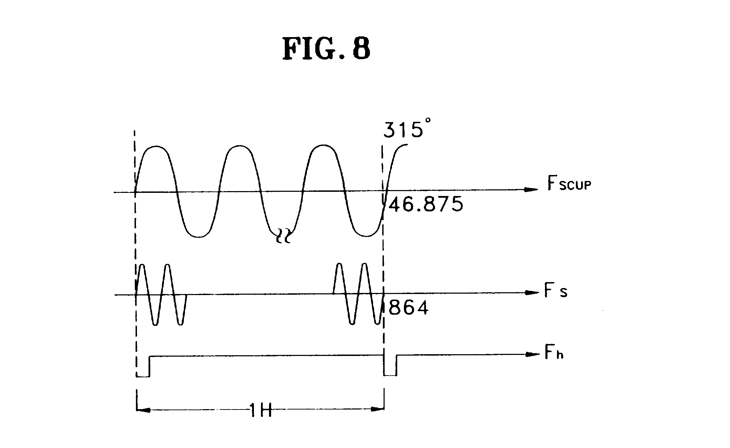

Figure 8 is a waveform showing the relation of horizontal synchronizing signal Fh, the low-band converting chrominance subcarrier, and the oscillating signal in the PAL system.

As illustrated in Figure 8, low-band converting chrominance subcarriers repeatedly appear 46.875 times within 1H, and the ending point is identical to the 7/8 periods of a low-band converting chrominance subcarrier, that is, 315°. Therefore, the modulo values of first modulo counter 50a and second modulo counter 52a are 864 and 8, respectively, and therefore, decoder 52b is controlled according to those values.

The above-described examples of the chrominance signal processing apparatus according to embodiments of the present invention provide for an advantage in that chrominance signal processing can be performed using a common oscillating signal.

Also, the device for forming the low-band converting chrominance subcarrier stores the basic wave form in a ROM and reads the stored wave form periodically, so as to form the low-band converting chrominance subcarrier. Therefore, irrespective of the ratio of the frequencies of the oscillating signal and the low-band converting chrominance subcarrier, the device can form the low-band converting chrominance subcarrier.

Further, the device has the advantage that it can be adapted not only to the NTSC system but also to the PAL system, by changing the sampled state of the basic wave form memorized in the ROM.

The reader skilled in the art of signal processing will note that although only the method for forming the low-band converting chrominance subcarrier and the device thereof are described in detail above, the chrominance subcarrier can also be formed on the same principle.

**Claims**

1.    A low-band converting chrominance signal processing apparatus which receives a chrominance signal modulated by a chrominance subcarrier to produce a chrominance signal modulated by a low-band converting chrominance subcarrier, the apparatus comprising:

a chrominance subcarrier generator (24) for generating a chrominance subcarrier;

a chrominance demodulator (28) for demodulating the chrominance signal modulated by said chrominance subcarrier, using said chrominance subcarrier;

a chrominance processor (30) for processing the demodulated chrominance signal from said chrominance demodulator (28);

a low-band converting chrominance subcarrier generator (34) for generating a low-band converting chrominance subcarrier; and

a chrominance modulator (32) for receiving the chrominance signal processed by said chrominance processor (30) and said low-band converting chrominance subcarrier thereby to produce the chrominance signal modulated by said low-band converting chrominance subcarrier;

characterised in that said apparatus further comprises:

an automatic frequency control circuit (20) for generating an oscillating signal having a predetermined frequency;

said chrominance subcarrier generator (24) receiving said oscillating signal to produce said chrominance subcarrier; and

said low-band converting chrominance subcarrier generator (34) receiving said oscillating signal thereby to produce said low-band converting chrominance subcarrier.

2. A low-band converting chrominance signal processing apparatus as claimed in claim 1, wherein;

said chrominance demodulator (28) demodulates the chrominance signal modulated by said chrominance subcarrier using said chrominance subcarrier, or demodulates the chrominance signal modulated by said low-band converting chrominance subcarrier using said low-band converting chrominance subcarrier;

said chrominance modulator (32) modulates the chrominance signal processed by said chrominance processor (30), using said low-band converting chrominance subcarrier or said chrominance subcarrier;

said apparatus further comprising;

a first switch (25a) for selecting one of said chrominance subcarrier and said low-band converting chrominance subcarrier for supply to said chrominance demodulator (28); and

a second switch (25b) for selecting one of said low-band converting chrominance subcarrier and said chrominance subcarrier for supply to said chrominance modulator (32).

3. A low-band converting chrominance signal processing apparatus as claimed in claim 1 or 2, wherein said low-band converting chrominance subcarrier generator (34) comprises:

a ROM (42) for generating the low-band converting chrominance subcarrier, storing therein the values which are equally sampled from the basic waveform of the low-band converting chrominance subcarrier into a frequency Fs of the oscillating signal corresponding to one period of a horizontal scanning line in the sampled order; and

an address generator (40) for generating a read-address of said ROM (42), which is repetitively recovered a number of times of the frequency Fscu of the low-band converting chrominance subcarrier corresponding to the period of said one horizontal scanning line per the oscillating signal.

4. A low-band converting chrominance signal processing apparatus as claimed in claim 3, wherein said ROM (42) for generating the low-band converting chrominance subcarrier stores the values sampled when 0° to 90° of the basic wave form of said low-band converting chrominance subcarrier are sampled a number Fs/4 of times.

5. A low-band converting chrominance signal processing apparatus as claimed in claim 3 or 4, wherein said address generator (40) comprises:

an accumulator (44) for accumulating therein Fscu/Fs per oscillation signal; and

an address collator (46) for converting the output of said accumulator (44) into an address suitable for said ROM for generating the low-band converting chrominance subcarrier.

6. A low-band converting chrominance signal processing apparatus as claimed in claim 5, wherein, in use, said result of Fscu/Fs is divided into a quotient and a remainder and the remainder is divided into a numerator and a denominator, and said accumulator (44) comprises:

a first constant generator (44f) for generating said numerator;

a second constant generator (44g) for generating said quotient;

a first adder (44a) for adding the numerator produced by said first constant generator to a feedback value produced by a first modulo calculator (44b) per oscillating signal;

said first modulo calculator (44b) performing a modulo operation on the output of said first adder (44a) using said denominator, thereby to supply a carry value for a second adder (44c) and feedback the remainder to said first adder (44a);

said second adder (44c) adding the quotient produced by said second constant generator (44g) to the carry value produced by said first modulo calculator (44b); and

a third adder (44d) for adding the output of said second adder (44c) to the remainder of a second modulo calculator (44e);

said second modulo calculator (44e) performing a modulo calculation on the output of said third adder (44d) by using the value Fs thereby to supply the remainder as an address for said third adder (44d) and said address collator (46).

7. A low-band converting chrominance signal processing apparatus as claimed in claim 6, wherein, in use, the basic wave form of said low-band converting chrominance subcarrier is divided into four domains in which the first domain occupies from zero to 90°, the second domain occupies from 91° to 180°, the third domain occupies from 181° to 270°, and the fourth domain occupies from 271° to 360°, and:

said address collator (46) outputs the accumulated value as the read-address in the case that the remainder of said second modulo calculator (44e) belongs to the first domain; said address collator (46) outputs the complement value of Fs/4 as the read-address in the case that the remainder thereof belongs to the second domain; said address collator (46) outputs the value subtracted by Fs/2 as the read-address in the case that the remainder thereof belongs to the third domain; and said address collator (46) outputs the complement value of Fs/2 in the case that the remainder thereof belongs to the fourth domain: said address collator (46) outputting a sine value in the first and second domains and a sine value having inverted bits in the third and fourth domains.

8. A low-band converting chrominance signal processing apparatus as claimed in claim 1 or 2, wherein said low-band converting chrominance subcarrier generator (34) comprises:

an output portion (54) for producing values which are sampled from Fscu low-band converting chrominance subcarriers at Fs sampling points each having a uniform interval, according to a relation between frequency Fscu of a chrominance subcarrier and frequency Fs of an oscillating signal which correspond to the period of one horizontal scanning line;

an address generator (50) for repetitively counting the oscillating signals per period of one horizontal scanning line thereby to form a read-address to be supplied for a look-up table; and

a domain determinator (52).

9. A low-band converting chrominance signal processing apparatus as claimed in claim 8, wherein said address generator (50) comprises:

a first modulo counter (50a) for counting said oscillating signal with a modulo value of Fs;

an address inverter (50b) for complementing the counted value of said first modulo counter (50a) by Fs to produce the result; and

a first multiplexer (50c) for selectively producing the output of said first modulo counter (50a) or the output of said address inverter according to a first domain signal applied to a selecting input terminal thereof.

10. A low-band converting chrominance signal processing apparatus as claimed in claim 8 or 9, wherein said domain determinator (52) comprises:

a second modulo counter (52a) for counting a horizontal synchronizing signal with modulo value 4; and

a decoder (52b) for receiving the output of said second modulo counter (52a) thereby to produce a first domain signal having inverted bits in the period of a horizontal scanning line, and a second domain signal having inverted bits during the period of first and second horizontal scanning lines and during the period of third and fourth horizontal scanning lines, where the starting address in the period of the first horizontal scanning line is identical to position 0° of a low-band converting chrominance subcarrier.

11. A low-band converting chrominance signal processing apparatus as claimed in claim 8, 9 or 10, wherein said output portion comprises:

a ROM (54a) for generating the low-band converting chrominance subcarrier, storing the values which are sampled of Fscu low-band converting chrominance subcarriers at Fs sampling points each having a uniform interval, in sampled order according to the relation to frequency Fscu of the low-band converting chrominance subcarrier and frequency Fs of the low-band converted chrominance corresponding to the period of an horizontal scanning line;

an inverter (54b) for inverting the output of said ROM (54a) for generating the low-band converting chrominance subcarrier; and

a second multiplexer (54c) for selectively producing the output of said ROM (54a) for generating the low-band converting chrominance subcarrier or the output of said inverter (54b) according to a domain signal applied to a selecting input terminal thereof.

12. A method of forming a low-band converting chrominance subcarrier using an oscillating signal having a predetermined frequency, said method for use in a low-band converting chrominance signal processing apparatus according to any of claims 1 to 11, said method comprising:

a first step for determining a frequency Fscu of the low-band converting chrominance subcarrier and the frequency Fs of the oscillating signal corresponding to the period of one horizontal scanning line, and sampling the basic waveform of the low-band chrominance subcarrier at Fs sampling points each having a uniform interval to be stored in a form of a look-up table;

a second step for producing read-addresses for said look-up table to be read Fscu times per Fs oscillating signals; and

a third step for producing sampled values corresponding to said read-address from said look-up table,

whereby Fscu chrominance subcarriers are formed per Fs oscillating signals.

13. A method of forming a low-band converting chrominance subcarrier as claimed in claim 12, wherein in the first step, said look-up table stores the values which are sampled from said low-band chrominance subcarrier from 0° to 90° Fs/4 times.

14. A method of forming a low-band converting chrominance subcarrier as claimed in claim 12 or 13, wherein in the second step, each Fscu/Fs is accumulated per oscillating signal and thereby the read-address is formed.

15. A method of forming a low-band converting chrominance subcarrier as claimed in claim 14, wherein an integer operation is performed with respect to the accumulated values so as to produce the read-address.

16. A method of forming a low-band converting chrominance subcarrier as claimed in claim 14, wherein the basic wave form of said low-band converting chrominance subcarrier is divided into four domains, in which the first domain occupies from 0° to 90°, the second domain occupies from 91° to 180°, the third domain occupies from 181° to 270°, and the fourth domain occupies from 271° to 360° ;
when said accumulated value belongs to the first domain, said second step provides said accumulated value as the read-address; when said accumulated value belongs to the second domain, said second step provides the complement value of Fs/4; when said accumulated value belongs to the third domain, said second step provides the value subtracted by Fs/2; and when said accumulated value belongs to the fourth domain, said second step provides the complement value of Fs/2.

17. A method of forming a low-band converting chrominance subcarrier as claimed in claim 14, wherein the basic wave form of said low-band converting chrominance subcarrier is divided into four domains, in which the first domain occupies from 0° to 90°, the second domain occupies from 91° to 180°, the third domain occupies from 181° to 270°, and the fourth domain occupies from 271° to 360°, said third step provides the value recovered from said look-up table for the first and the second domains, and the value recovered from said look-up table and inverted for the third and the fourth domains.

18. A method of processing a low-band converted chrominance signal, said method for use in a low-band converting chrominance signal processing apparatus according to any of claims 1 to 11, said method comprising:

a first step of determining a frequency Fscu of a low-band converting chrominance subcarrier and a frequency Fs of an oscillating signal corresponding to a period of one horizontal scanning line, and sampling the basic wave form of the low-band converted chrominance signal at Fs sampling points each having a uniform interval, to be stored in a form of a look-up table;

a second step of producing a read-address for said look-up table to be read Fscu times per Fs oscillating signals; and

a third step for producing a sampled value corresponding to said read-address from said look-up table,

whereby Fscu low-band converting chrominance subcarriers are provided per Fs oscillating signals.

19. A method of forming a low-band converting chrominance subcarrier using an oscillating signal having a predetermined frequency, said method for use in a low-band converting chrominance signal processing apparatus according to any of claims 1 to 11, said method comprising:

a first step of determining a frequency Fscu of the low-band converting chrominance subcarrier and a frequency Fs of the oscillating signal corresponding to a period of one horizontal scanning line, and sampling Fscu low-band converted chrominance signals at Fs sampling points each having a uniform interval thereby to be stored in the form of a look-up table;

a second step for repetitively counting the oscillating signal per period of one horizontal scanning line to form a read-address which is supplied to said look-up table; and

a third step for producing a sampled value corresponding to said read-address from said look-up table,

whereby Fscu low-band converting chrominance subcarriers are formed per Fs oscillating signals.

20. A method of forming a low-band converting chrominance subcarrier as claimed in claim 19, wherein said second step forms the address in an order that the address of a present period of horizontal scanning line is reversely designated to that of the previous period of horizontal scanning line.

21. A method of forming a low-band converting chrominance subcarrier as claimed in claim 20, wherein a starting address in the period of a first horizontal scanning line is located on position 0° of the low-band converting chrominance subcarrier, and said third step repetitively provides the value read in said look-up table during the period of the first and the second horizontal scanning lines, and the value read in said look-up table and having an inverted sign during the period of the third and the fourth horizontal scanning lines.

**Patentansprüche**

1. Eine Vorrichtung zur Chrominanzsignalverarbeitung zur Lowband-Umwandlung, die ein durch ein Chrominanzunterträger moduliertes Chrominanzsignal erhält, um ein Chrominanzsignal zu erzeugen, das durch einen Chrominanzunterträger zur Lowband-Umwandlung moduliert worden ist, wobei die Vorrichtung umfaßt:

einen Generator (24) für einen Chrominanzunterträger zur Erzeugung eines Chrominanzunterträgers;

einen Chrominanzdemodulator (28) zur Demodulation des Chrominanzsignals, das durch den genannten Chrominanzunterträger moduliert worden ist, wobei der genannte Chrominanzunterträger verwendet wird;

einen Chrominanzprozessor (30) zur Verarbeitung des demodulierten Chrominanzsignals von dem genannten Chrominanzdemodulator (28);

einen Generator (34) für einen Chrominanzunterträger zur Lowband-Umwandlung, um einen Chrominanzunterträger zur Lowband-Umwandlung zu erzeugen; und

einen Chrominanzmodulator (32), der das Chrominanzsignal, das von dem genannten Chrominanzprozessor (30) verarbeitet worden ist, und den genannten Chrominanzunterträger zur Lowband-Umwandlung erhält, damit das Chrominanzsignal erzeugt wird, das durch den genannten Chrominanzunterträger zur Lowband-Umwandlung moduliert ist;

**dadurch gekennzeichnet**, daß die genannte Vorrichtung des weiteren umfaßt:

eine automatische Frequenzsteuerschaltung (20) zur Erzeugung eines Schwingungssignals, das eine vorbestimmte Frequenz aufweist;

der genannte Generator (24) für den Chrominanzunterträger das genannte Schwingungssignal erhält, um den genannten Chrominanzunterträger zu erzeugen; und

der genannte Generator (34) für den Chrominanzunterträger zur Lowband-Umwandlung das genannte Schwingungssignal erhält, um dadurch den genannten Chrominanzunterträger zur Lowband-Umwandlung zu erzeugen.

2. Eine Vorrichtung zur Chrominanzsignalverarbeitung zur Lowband-Umwandlung, wie in Anspruch 1 beansprucht, wobei

der genannte Chrominanzdemodulator (28) das Chrominanzsignal demoduliert, das durch den genannten Chrominanzunterträger moduliert worden ist, wobei der genannte Chrominanzunterträger verwendet wird, oder das Chrominanzsignal demoduliert, das durch den genannten Chrominanzunterträger zur Lowband-Umwandlung moduliert worden ist, wobei der genannte Chrominanzunterträger zur Lowband-Umwandlung verwendet wird;

der genannte Chrominanzmodulator (32) das Chrominanzsignal demoduliert, das durch den genannten Chrominanzprozessor (30) verarbeitet worden ist, wobei der genannte Chrominanzunterträger zur Lowband-Umwandlung oder der genannte Chrominanzunterträger verwendet wird;

wobei die genannte Vorrichtung des weiteren umfaßt:

einen ersten Schalter (25a), um den genannten Chrominanzunterträger oder den genannten Chrominanzunterträger zur Lowband-Umwandlung auszuwählen, um ihn dem genannten Chrominanzdemodulator (28) zuzuführen; und

einen zweiten Schalter (25b), um den genannten Chrominanzunterträger zur Lowband-Umwandlung oder den genannten Chrominanzunterträger auszuwählen, um ihn dem genannten Chrominanzdemodulator (32) zuzuführen.

3. Eine Vorrichtung zur Chrominanzsignalverarbeitung zur Lowband-Umwandlung, wie in Anspruch 1 oder 2 beansprucht, wobei der genannte Generator (34) für einen Chrominanzunterträger zur Low-

band-Umwandlung umfaßt:

einen ROM (42) zur Erzeugung des Chrominanzunterträgers zur Lowband-Umwandlung, wobei darin die Werte gespeichert werden, die von der Grundwellenform des Chrominanzunterträgers zur Lowband-Umwandlung bei einer Frequenz Fs des Schwingungssignals gleichmäßig abgetastet worden sind, das einer Periode einer horizontalen Abtastzeile in der abgetasteten Reihenfolge entspricht; und

einen Adressengenerator (40) zur Erzeugung einer Leseadresse des genannten ROM (42), die eine Anzahl von Malen der Frequenz Fscu des Chrominanzunterträgers zur Lowband-Umwandlung wiederholt wiedergewonnen wird, die der Periode der genannten einen horizontalen Abtastzeile pro Schwingungssignal entspricht.

4. Eine Vorrichtung zur Chrominanzsignalverarbeitung zur Lowband-Umwandlung, wie in Anspruch 3 beansprucht, wobei der genannte ROM (42) zur Erzeugung des Chrominanzunterträgers zur Lowband-Umwandlung die Werte speichert, die abgetastet werden, wenn von 0° bis 90° der Grundwellenform des genannten Chrominanzunterträgers zur Lowband-Umwandlung Fs/4 mal abgetastet werden.

5. Eine Vorrichtung zur Chrominanzsignalverarbeitung zur Lowband-Umwandlung, wie in Anspruch 3 oder 4 beansprucht, wobei der genannte Adressengenerator (40) umfaßt:

einen Akkumulator (44) zum Aufaddieren von Fscu/Fs pro Schwingungssignal; und

einen Adressenmischer (46), um den Ausgang des genannten Akkumulators (44) in eine Adresse umzuwandeln, die für den genannten ROM zur Erzeugung des Chrominanzunterträgers zur Lowband-Umwandlung geeignet ist.

6. Eine Vorrichtung zur Chrominanzsignalverarbeitung zur Lowband-Umwandlung, wie in Anspruch 5 beansprucht, wobei bei der Verwendung das genannte Ergebnis von Fscu/Fs in einem Quotienten und einen Rest dividiert wird, und der Rest in einen Zähler und einen Nenner unterteilt ist, und der genannte Akkumulator (44) umfaßt:

einen ersten Konstanten-Generator (44f) zur Erzeugung des genannten Zählers;

einen zweiten Konstanten-Generator (44g) zur Erzeugung des genannten Quotienten;

einen ersten Addierer (44a), um den durch den genannten ersten Konstanten-Generator erzeugten Zähler zu einem Rückkopplungswert zu addieren, der durch einen ersten Modulorechner (44b) pro Schwingungssignal erzeugt wird;

der genannte erste Rechner (44b) eine Modulooperation an dem Ausgang des genannten ersten Addierers (44a) unter Verwendung des genannten Nenners ausführt, um einen Übertragswert für einen zweiten Addierer (44c) zuzuführen und den Rest zu dem genannten ersten Addierer (44a) zurückzukoppeln;

der genannte zweite Addierer (44c) den Quotienten, der durch den genannten zweiten Konstanten-Generator (44g) erzeugt worden ist, zu dem Übertragswert addiert, der durch den genannten ersten Modulorechner (44b) erzeugt worden ist; und

ein dritter Addierer (44d), um den Ausgang des genannten zweiten Addierers (44c) zu dem Rest eines zweiten Modulorechners (44e) zu addieren;

der genannte zweite Modulorechner (44e) eine Moduloberechnung an dem Ausgang des genannten dritten Addierers (44d) ausführt, wobei der Wert Fs verwendet wird, um dadurch den Rest als eine Adresse dem genannten dritten Addierer (44d) und dem genannten Adressenmischer (46) zuzuführen.

7. Eine Vorrichtung zur Chrominanzsignalverarbeitung zur Lowband-Umwandlung, wie in Anspruch 6 beansprucht, wobei bei der Verwendung die Grundwellenform des genannten Chrominanzunterträgers zur Lowband-Umwandlung in vier Bereiche unterteilt ist, von denen der erste Bereich von Null bis 90° belegt, der zweite Bereich von 91° bis 180° belegt, der dritte Bereich von 181° bis 270° belegt und der vierte Bereich von 271° bis 360° belegt, und:

der genannte Adressenmischer (46) gibt den aufaddierten Wert als die Leseadresse in dem Fall aus, daß der Rest des genannten zweiten Modulorechners (44e) zu dem ersten Bereich gehört; der genannte Adressenmischer (46) gibt den komplementären Wert von Fs/4 als Leseadresse in dem Fall aus, daß dessen Rest zu dem zweiten Bereich gehört; der genannte Adressenmischer (46) gibt den Wert, von dem Fs/2 subtrahiert worden ist, als die Leseadresse in dem Fall aus, daß dessen Rest zu dem dritten Bereich gehört; der genannte Adressenmischer (46) gibt den komplementären Wert von Fs/2 in dem Fall aus, daß der Rest zu dem vierten Bereich gehört; der genannte Adressenmischer (46) gibt einen Sinuswert in dem ersten und zweiten Bereich und einen Sinuswert mit umgekehrten Bits in dem dritten und vierten Bereich aus.

8. Eine Vorrichtung zur Chrominanzsignalverarbeitung zur Lowband-Umwandlung, wie in Anspruch 1 oder 2 beansprucht, wobei der Generator (34) für den Chrominanzunterträger zur Lowband-Umwandlung umfaßt:

einen Ausgangsabschnitt (54) zur Erzeugung von Werten, die von Fscu Chrominanzunterträgern zur Lowband-Umwandlung an Fs Abtastpunkten, die jeweils ein gleichförmiges Intervall aufweisen, gemäß einer Beziehung zwischen der Frequenz Fscu eines Chrominanzunterträgers und der Frequenz Fs eines Schwingungssignals abgetastet worden sind, die zu der Periode einer horizontalen Abtastzeile entsprechen;

einen Adressengenerator (50), um wiederholt die Schwingungssignale pro Periode einer horizontalen Abtastzeile zu zählen, um dadurch eine Leseadresse zu bilden, die einer Nachschlagetabelle zugeführt werden soll; und

eine Bereichsbestimmungseinrichtung (52).

9. Eine Vorrichtung zur Chrominanzsignalverarbeitung zur Lowband-Umwandlung, wie in Anspruch 8 beansprucht, wobei der genannte Adressengenerator (50) umfaßt:

einen ersten Modulozähler (50a) zum Zählen des genannten Schwingungssignals mit einem Modulowert von Fs;

eine Adressenumkehrschaltung (50b) zur Komplementierung des mit dem genannten ersten Modulozähler (50a) mit Fs gezählten Werts, um das Ergebnis zu erzeugen; und

einen ersten Multiplexer (50c), um selektiv den Ausgang des genannten ersten Modulozählers (50a) oder den Ausgang der genannten Adressenumkehrschaltung gemäß einem ersten Bereichssignal zu erzeugen, das an eine Auswähleingangsklemme davon angelegt wird.

10. Eine Vorrichtung zur Chrominanzsignalverarbeitung zur Lowband-Umwandlung, wie in Anspruch 8 oder 9 beansprucht, wobei die genannte Bereichsbestimmungseinrichtung (52) umfaßt:

einen zweiten Modulozähler (52a), um ein horizontales Synchronsignal mit dem Modulowert 4 zu zählen; und

einen Decodierer (52b), der den Ausgang des genannten zweiten Modulozählers (52a) erhält, um dadurch ein erstes Bereichssignal, das umgekehrte Bits in der Periode einer horizontalen Abtastzeile aufweist, und ein zweites Bereichssignal, das umgekehrte Bits, während der Periode der ersten und zweiten horizontalen Abtastzeilen und während der Periode der dritten und vierten horizontalen Abtastzeilen aufweist, zu erzeugen, wobei die Anfangsadresse in der Periode der ersten horizontalen Abtastzeile identisch der Position 0° eines Chrominanzunterträgers zur Lowband-Umwandlung ist.

11. Eine Vorrichtung zur Chrominanzsignalverarbeitung zur Lowband-Umwandlung, wie in Anspruch 8, 9 oder 10 beansprucht, wobei der genannte Ausgangsabschnitt umfaßt:

einen ROM (54a) zur Erzeugung des Chrominanzunterträger zur Lowband-Umwandlung, der die Werte speichert, die von den Fscu Chrominanzunterträgern zur Lowband-Umwandlung an Fs Abtastpunkten abgetastet werden, die jeweils ein gleichförmiges Intervall aufweisen, in der abgetasteten Reihenfolge gemäß der Beziehung der Frequenz Fscu des Chrominanzunterträgers zur Lowband-Umwandlung und der Frequenz Fs des Lowband-umgewandelten Chrominanzunterträgers entsprechend der Periode einer horizontalen Abtastzeile speichert;

eine Umkehrschaltung (54b), um den Ausgang des genannten ROM (54a) zur Erzeugung eines Chrominanzunterträgers zur Lowband-Umwandlung umzukehren; und

einen zweiten Multiplexer (54c), um selektiv den Ausgang des genannten ROM (54a) zur Erzeugung des Chrominanzunterträgers zur Lowband-Umwandlung oder den Ausgang der genannten Umkehrschaltung (54b) gemäß einem Bereichssignal zu erzeugen, das an eine Auswähleingangsklemme davon angelegt wird.

12. Ein Verfahren zur Bildung eines Chrominanzunterträgers zur Lowband-Umwandlung, wobei ein Schwingungssignal mit einer vorbestimmten Frequenz verwendet wird und das genannte Verfahren zur Verwendung in einer Vorrichtung zur Chrominanzsignalverarbeitung zur Lowband-Umwandlung gemäß irgendeinem der Ansprüche 1 bis 11 dient, wobei das genannte Verfahren umfaßt:

einen ersten Schritt, um eine Frequenz Fscu des Chrominanzunterträgers zur Lowband-Umwandlung und die Frequenz Fs des Schwingungssignals zu bestimmen, das der Periode einer horizontalen Abtastzeile entspricht, und die Grundwellenform des Lowband-Chrominanzunterträgers an Fs Abtastpunkten, die jeweils ein gleichförmiges Intervall aufweisen, abzutasten und in der Form einer Nachschlagetabelle zu speichern;

einen zweiten Schritt, um Leseadressen für die genannte Nachschlagetabelle zu erzeugen, die Fscu mal pro Fs Schwingungssignalen gelesen wird; und

einen dritten Schritt, um abgetastete Werte zu erzeugen, die der genannte Leseadresse von der genannten Nachschlagetabelle entsprechen,

wodurch Fscu Chrominanzunterträger pro Fs Schwingungssignalen gebildet werden.

13. Ein Verfahren zur Bildung eines Chrominanzunterträgers zur Lowband-Umwandlung, wie in Anspruch 12 beansprucht, wobei in dem ersten Schritt die genannte Nachschlagetabelle die Werte speichert, die von dem genannten Lowband-Chrominanzunterträger von 0° bis 90° Fs/4 mal abgetastet werden.

14. Ein Verfahren zur Bildung eines Chrominanzunterträgers zur Lowband-Umwandlung, wie in Anspruch 12 oder 13 beansprucht, wobei in dem zweiten Schritt jedes Fscu/Fs pro Schwingungssignal aufaddiert und dadurch die Leseadresse gebildet wird.

15. Ein Verfahren zur Bildung eines Chrominanzunterträgers zur Lowband-Umwandlung, wie in Anspruch 14 beansprucht, wobei eine ganzzahlige Operation in bezug auf die aufaddierten Werte durchgeführt wird, um die Leseadresse zu erzeugen.

16. Ein Verfahren zur Bildung eines Chrominanzunterträgers zur Lowband-Umwandlung, wie in Anspruch 14 beansprucht, wobei die Grundwellenform des genannten Chrominanzunterträgers zur Lowband-Umwandlung in vier Bereiche unterteilt wird, von denen der erste Bereich von 0° bis 90° belegt, der zweite Bereich von 91° bis 180° belegt, der dritte Bereich von 181° bis 270° belegt und der vierte Bereich von 271° bis 360° belegt;

wenn der genannte aufaddierte Wert zu dem ersten Bereich gehört, liefert der genannte zweite Schritt den genannten aufaddierten Wert als die Leseadresse; wenn der genannte aufaddierte Wert zu dem zweiten Bereich gehört, liefert der genannte zweite Schritt den komplementären Wert von Fs/4; wenn der genannte aufaddierte Wert zu dem dritten Bereich gehört, liefert der genannte zweite Schritt den Wert, von dem Fs/2 subtrahiert worden ist; und wenn der genannte aufaddierte Wert zu dem vierten Bereich gehört, liefert der genannte zweite Schritt den komplementären Wert von Fs/2.

17. Ein Verfahren zur Bildung eines Chrominanzunterträgers zur Lowband-Umwandlung, wie in Anspruch 14 beansprucht,

wobei die Grundwellenform des genannten Chrominanzunterträgers zur Lowband-Umwandlung in vier Bereiche unterteilt wird, von denen der erste Bereich von 0° bis 90° belegt, der zweite Bereich von 91° bis 180° belegt, der dritte Bereich von 181° bis 270° belegt und der vierte Bereich von 271° bis 360° belegt;

wobei der genannte dritte Schritt den Wert, der von der genannten Nachschlagetabelle für den ersten und den zweiten Bereich wiedergewonnen wird, und den Wert liefert, der von der genannten Nachschlagetabelle wiedergewonnen und für den dritten und vierten Bereich umgekehrt wird.

18. Ein Verfahren zur Verarbeitung eines Lowband-umgewandelten Chrominanzsignals zur, wobei das genannte Verfahren zur Verwendung in einer Vorrichtung zur Chrominanzsignalverarbeitung zur Lowband-Umwandlung gemäß irgendeinem der Ansprüche 1 bis 11 dient, und das genannte Verfahren umfaßt:

einen ersten Schritt, um eine Frequenz Fscu eines Chrominanzunterträgers zur Lowband-Umwandlung und die Frequenz Fs eines Schwingungssignals zu bestimmen, das der Periode einer horizontalen Abtastzeile entspricht, und die Grundwellenform des Lowband-umgewandelten Chrominanzsignals an Fs Abtastpunkten, die jeweils ein gleichförmiges Intervall aufweisen, abzutasten und in der Form einer Nachschlagetabelle zu speichern;

einen zweiten Schritt, um eine Leseadresse für die genannte Nachschlagetabelle zu erzeugen, die Fscu mal pro Fs Schwingungssignalen gelesen wird; und

einen dritten Schritt, um einen abgetasteten Werte zu erzeugen, die der genannte Leseadresse von der genannten Nachschlagetabelle entspricht,

wodurch Fscu Lowband-umwandelnde Chrominanzunterträger pro Fs Schwingungssignalen gebildet werden.

19. Ein Verfahren zur Bildung eines Chrominanzunterträgers zur Lowband-Umwandlung, wobei ein Schwingungssignal mit einer vorbestimmten Frequenz verwendet wird und das genannte Verfahren zur Verwendung in einer Vorrichtung zur Chrominanzsignalverarbeitung zur Lowband-Umwandlung gemäß irgendeinem der Ansprüche 1 bis 11 dient, wobei das genannte Verfahren umfaßt:

einen ersten Schritt, um eine Frequenz Fscu des Chrominanzunterträgers zur Lowband-Umwandlung und eine Frequenz Fs des Schwingungssignals zu bestimmen, das einer Periode einer horizontalen Abtastzeile entspricht, und Fscu Lowband-umgewandelte Chrominanzsignale an Fs Abtastpunkten, die jeweils ein gleichförmiges Intervall aufweisen, abzutasten, damit sie in der Form einer Nachschlagetabelle abgespeichert werden;

einen zweiten Schritt, um wiederholt das Schwingungssignal pro Periode einer horizontalen Abtastzeile zu zählen, um eine Leseadresse zu bilden, die der genannten Nachschlagetabelle zugeführt wird; und

einen dritten Schritt, um einen abgetasteten Wert zu erzeugen, der der genannte Leseadresse von der genannten Nachschlagetabelle entspricht,

wodurch Fscu Chrominanzunterträger zur Lowband-Umwandlung pro Fs Schwingungssignalen gebildet werden.

20. Ein Verfahren zur Bildung eines Chrominanzunterträgers zur Lowband-Umwandlung, wie in Anspruch 19 beansprucht, wobei der genannte zweite Schritt die Adresse in einer Reihenfolge bildet, daß die Adresse einer gegenwärtigen Periode einer horizontalen Abtastzeile umgekehrt zu derjenigen der vorhergehenden Periode der horizontalen Abtastzeile bezeichnet wird.

21. Ein Verfahren zur Bildung eines Chrominanzunterträgers zur Lowband-Umwandlung, wie in Anspruch 20 beansprucht, wobei eine Anfangsadresse in der Periode einer horizontalen Abtastzeile an einer Position 0° des Chrominanzunterträgers zur Lowband-Umwandlung angeordnet wird, und der genannte dritte Schritt wiederholt den in der genannten Nachschlagetabelle während der Periode der ersten und zweiten horizontalen Abtastzeile gelesenen Wert liefert, und den Wert, der in der genannten Nachschlagetabelle gelesen wurde und ein umgekehrtes Vorzeichen hat, während der Periode der dritten und vierten horizontalen Abtastzeile liefert.

## Revendications

1. Dispositif de traitement de signal de chrominance à conversion de bande basse recevant un signal de chrominance modulé par une sous-porteuse de chrominance afin de produire un signal de chrominance modulé par une sous-porteuse de chrominance à conversion de bande basse, le dispositif comprenant :

   un générateur de sous-porteuse de chrominance (24) destiné à générer une sous-porteuse de chrominance ;
   un démodulateur de chrominance (28) destiné à démoduler le signal de chrominance modulé par ladite sous-porteuse de chrominance, à l'aide de ladite sous-porteuse de chrominance ;
   un processeur de chrominance (30) destiné à traiter le signal de chrominance démodulé à l'aide dudit démodulateur de chrominance (28) ;
   un générateur de sous-porteuse de chrominance à conversion de bande basse (34) destiné à générer une sous-porteuse de chrominance à conversion de bande basse ; et
   un modulateur de chrominance (32) destiné à recevoir le signal de chrominance traité par ledit processeur de chrominance (30) et ladite sous-porteuse de chrominance à conversion de bande basse afin de produire le signal de chrominance modulé par ladite sous-porteuse de chrominance à conversion de bande basse ;

   caractérisé en ce que ledit dispositif comporte en outre :

   un circuit de commande de fréquence automatique (20) destiné à générer un signal oscillant ayant une fréquence prédéterminée ;
   un générateur de sous-porteuse de chrominance (24) destiné à recevoir ledit signal d'oscillation pour produire ladite sous-porteuse de chrominance ; et
   ledit générateur de sous-porteuse de chrominance à conversion de bande basse (34) recevant ledit signal oscillant afin de produire ladite sous-porteuse de chrominance à conversion de bande basse.

2. Dispositif de traitement de signal de chrominance à conversion de bande basse selon la revendication 1, dans lequel :

   ledit démodulateur de chrominance (28) démodule le signal de chrominance modulé par ladite sous-porteuse de chrominance à l'aide de ladite sous-porteuse de chrominance ou démodule le signal de chrominance modulé par ladite sous-porteuse de chrominance à conversion de bande basse en utilisant ladite sous-porteuse de chrominance à conversion de bande basse ;
   ledit modulateur de chrominance (32) module le signal de chrominance traité par ledit processeur de chrominance (30) en utilisant ladite sous-porteuse de chrominance à conversion de bande basse ou ladite sous-porteuse de chrominance ;
   ledit dispositif comprenant en outre :
   un premier commutateur (25a) destiné à sélectionner l'une de ladite sous-porteuse de chrominance et de ladite sous-porteuse de chrominance à conversion de bande basse pour l'appliquer audit démodulateur de chrominance (28) ; et
   un second commutateur (25b) destiné à sélectionner l'une de ladite sous-porteuse de chrominance et de ladite sous-porteuse de chrominance à conversion de bande basse pour l'appliquer audit modulateur de chrominance (32).

3. Dispositif de traitement de signal de chrominance à conversion de bande basse selon la revendication 1 ou 2, dans lequel ledit générateur de sous-porteuse de chrominance à conversion de bande basse (34) comprend :

   une mémoire ROM (42) destinée à générer la sous-porteuse de chrominance à conversion de bande basse, pour y stocker les valeurs échantillonnées de manière égale à partir de la forme d'onde de base de la sous-porteuse de chrominance à conversion de bande basse en une fréquence Fs du signal oscillant correspondant à une période d'une ligne de balayage horizontal dans l'ordre d'échantillonnage ; et
   un générateur d'adresse (40) destiné à générer une adresse de lecture de ladite mémoire ROM (42) qui est extraite de manière répétitive selon un certain nom de fois la fréquence Fscu de la sous-porteuse de chrominance à conversion de bande basse correspondant à la période de ladite une ligne de balayage horizontal par signal d'oscillation.

**4.** Dispositif de traitement de signal de chrominance à conversion de bande basse selon la revendication 3, dans lequel ladite mémoire ROM (42) destinée à générer la sous-porteuse de chrominance à conversion de bande basse stocke les valeurs échantillonnées lorsqu'il y a échantillonnage de Fs/4 fois de 0° à 90° de la forme d'onde de base de ladite sous-porteuse de chrominance à conversion de bande basse.

**5.** Dispositif de traitement de signal de chrominance à conversion de bande basse selon la revendication 3 ou 4, dans lequel ledit générateur d'adresse (40) comprend :

un accumulateur (44) destiné à accumuler le signal Fscu/Fs pour chaque signal d'oscillation ; et
un dispositif assembleur d'adresse (46) destiné à convertir la sortie dudit accumulateur (44) en une adresse adaptée à ladite mémoire ROM afin de générer la sous-porteuse de chrominance à conversion de bande basse.

**6.** Dispositif de traitement de signal de chrominance à conversion de bande basse selon la revendication 5, dans lequel, en utilisation, ledit résultat de Fscu/Fs est divisé en un quotient et un reste, et le reste est divisé en un numérateur et un dénominateur, et ledit accumulateur (44) comprend :

un premier générateur de constante (44f) destiné à générer ledit numérateur ;
un second générateur de constante (44g) destiné à générer ledit quotient ;
un premier additionneur (44a) destiné à additionner le numérateur produit par ledit premier générateur de constante à une valeur de réinjection produite par un premier calculateur de modulo (44b) par signal oscillant ;
ledit premier calculateur de modulo (44b) effectuant une opération de modulo sur la sortie dudit premier additionneur (44a) en utilisant ledit dénominateur, ceci afin d'appliquer une valeur de retenue à un second additionneur (44c) et de réinjecter le reste dans ledit premier additionneur (44a) ;
ledit second additionneur (44c) additionnant le quotient produit par ledit second générateur de constante (44g) à la valeur de retenue produite par ledit premier calculateur de modulo (44b) ; et
un troisième additionneur (44d) additionnant la sortie dudit second additionneur (44c) au reste d'un second calculateur de modulo (44e) ;
ledit second calculateur de modulo (44e) effectuant un calcul de modulo sur la sortie dudit troisième additionneur (44d) en utilisant la valeur Fs afin d'appliquer le reste sous la forme d'une adresse pour ledit troisième additionneur (44d) et ledit dispositif assembleur d'adresse (46).

**7.** Dispositif de traitement de signal de chrominance à conversion de bande basse selon la revendication 6, dans lequel, en utilisation, la forme d'onde de base de la dite sous-porteuse de chrominance à conversion de bande basse est divisée en quatre domaines dans lesquels le premier domaine concerne les angles compris entre zéro et 90°, le second domaine concerne les angles compris entre 91° et 180°, le troisième domaine concerne les angles compris entre 181° et 270° et le quatrième domaine concerne les angles compris entre 271° et 360°, et :

ledit dispositif assembleur d'adresse (46) produit la valeur accumulée sous la forme d'une adresse de lecture dans le cas où le reste dudit second calculateur de modulo (44e) appartient au premier domaine; ledit dispositif assembleur d'adresse (46) produit la valeur complémentaire de Fs/4 sous la forme de l'adresse de lecture dans le cas où son reste appartient au second domaine ; ledit dispositif assembleur d'adresse (46) produit la valeur soustraite à Fs/2 pour former l'adresse de lecture dans le cas où son reste appartient au troisième domaine et ledit dispositif assembleur d'adresse (46) produit la valeur complémentaire de Fs/2 dans le cas où son reste appartient au quatrième domaine, ledit dispositif assembleur d'adresse (46) produisant une valeur sinusoïdale dans les premier et second domaines et une valeur sinusoïdale ayant des valeurs de bits inversées dans les troisième et quatrième domaines.

**8.** Dispositif de traitement de signal de chrominance à conversion de bande basse selon la revendication 1 ou 2, dans lequel ledit générateur de sous-porteuse de chrominance à conversion de bande basse (34) comprend :

une partie de sortie (54) destinée à produire des valeurs échantillonnées à partir des sous-porteuses de chrominance à conversion de bande basse Fscu en Fs points d'échantillonnage ayant chacun un intervalle uniforme, selon une relation entre la fréquence Fscu d'une sous-porteuse de chrominance et une fréquence Fs d'un signal oscillant correspondant à la période d'une ligne de balayage horizontal ;
un générateur d'adresse (50) destiné à compter de manière répétitive les signaux oscillants par période d'un ligne de balayage horizontal afin de former une adresse de lecture à appliquer à une table de valeurs ; et
un dispositif de détermination de domaine (52).

9. Dispositif de traitement de signal de chrominance à conversion de bande basse selon la revendication 8, dans lequel ledit générateur d'adresse (50) comprend :

un premier compteur de modulo (50a) destiné à compter ledit signal d'oscillation avec une valeur de modulo de Fs ;
un inverseur d'adresse (50b) servant à complémenter la valeur comptée dudit premier compteur de modulo (50a) par Fs pour produire le résultat ; et
un premier multiplexeur (50c) destiné à produire de manière sélective la sortie dudit premier compteur de modulo (50a) ou la sortie dudit inverseur d'adresse selon un signal de premier domaine appliqué à une de ses bornes d'entrée de sélection.

10. Dispositif de traitement de signal de chrominance à conversion de bande basse selon la revendication 8 ou 9, dans lequel ledit dispositif de détermination de domaine (52) comprend :

un second compteur de modulo (52a) servant à compter un signal de synchronisation horizontale avec une valeur de modulo de 4 ; et
un décodeur (52b) destiné à recevoir la sortie dudit second compteur de modulo (52a) afin de produire un signal de premier domaine ayant des bits inversés dans la période d'une ligne de balayage horizontal et un second signal de domaine ayant des bits inversés durant la période des première et seconde lignes de balayage horizontal et durant la période des troisième et quatrième lignes de balayage horizontal, où l'adresse de départ de la période de la première ligne de balayage horizontale est identique à la position 0° d'une sous-porteuse de chrominance à conversion de bande basse.

11. Dispositif de traitement de signal de chrominance à conversion de bande basse selon la revendication 8, 9 ou 10, dans lequel ladite partie de sortie comprend :

une mémoire ROM (54a) destinée à générer la sous-porteuse de chrominance à conversion de bande basse, pour y stocker les valeurs échantillonnées des Fscu sous-porteuses de chrominance à conversion de bande basse en Fs points d'échantillonnage, tous d'intervalle uniforme, dans l'ordre d'échantillonnage selon la relation à la fréquence Fscu de la sous-porteuse de chrominance à conversion de bande basse et la fréquence Fs de la chrominance convertie en bande basse correspondant à la période d'une ligne de balayage horizontale ;

un inverseur (54b) destiné à inverser la sortie de ladite mémoire ROM (54a) afin de générer la sous-porteuse de chrominance à conversion de bande basse ; et
un second multiplexeur (54c) destiné à produire de manière sélective la sortie de ladite mémoire ROM (54a) afin de générer la sous-porteuse de chrominance à conversion de bande basse ou la sortie dudit inverseur (54b) selon un signal de domaine appliqué à une de ses bornes d'entrée de sélection.

12. Procédé de formation d'une sous-porteuse de chrominance à conversion de bande basse utilisant un signal d'oscillation ayant une fréquence prédéterminée, ledit procédé étant destiné à un dispositif de traitement de signal de chrominance à conversion de bande basse selon l'une quelconque des revendications 1 à 11, ledit procédé comprenant :

une première étape destinée à déterminer une fréquence Fscu de la sous-porteuse de chrominance à conversion de bande basse et la fréquence Fs du signal oscillant correspondant à la période d'une ligne de balayage horizontal, et à échantillonner la forme d'onde de base de la sous-porteuse de chrominance à conversion de bande basse en Fs points d'échantillonnage ayant chacun un intervalle uniforme à mémoriser sous une forme de table de valeurs ;
une seconde étape destinée à produire des adresses de lecture pour ladite table de valeurs destinées à être lues à Fscu pour Fs signaux d'oscillation ; et
une troisième étape destinée à produire des valeurs d'échantillonnage correspondant à ladite adresse de lecture depuis ladite table de valeurs,
ce par quoi les sous-porteuses de chrominance Fscu sont formées pour Fs signaux d'oscillation.

13. Procédé de formation d'une sous-porteuse de chrominance à conversion de bande basse selon la revendication 12, dans lequel, lors de la première étape, ladite table de valeurs contient les valeurs qui sont échantillonnées à partir de ladite sous-porteuse de chrominance à conversion de bande basse à Fs/4 de 0° à 90°.

14. Procédé de formation d'une sous-porteuse de chrominance à conversion de bande basse selon la revendication 12 ou 13, dans lequel lors de la seconde étape, chaque Fscu/Fs est accumulé pour chaque signal oscillant et l'adresse de lecture est ainsi formée.

15. Procédé de formation d'une sous-porteuse de chrominance à conversion de bande basse selon la revendication 14, dans lequel une opération entière est effectuée sur les valeurs accumulées afin de produire l'adresse de lecture.

16. Procédé de formation d'une sous-porteuse de chrominance à conversion de bande basse selon la revendication 14, dans lequel la forme d'onde de base de la dite sous-porteuse de chrominance à conversion de bande basse est divisée en quatre domaines dans lesquels le premier domaine concerne les angles compris entre zéro et 90°, le second domaine concerne les angles compris entre 91° et 180°, le troisième domaine concerne les angles compris entre 181° et 270° et le quatrième domaine concerne les angles compris entre 271° et 360° ;

lorsque ladite valeur accumulée appartient au premier domaine, ladite seconde étape produit la valeur accumulée sous la forme d'une adresse de lecture ; lorsque ladite valeur accumulée appartient au second domaine, ladite seconde étape produit la valeur complémentaire de Fs/4; lorsque ladite valeur accumulée appartient au troisième domaine, ladite seconde étape produit la valeur soustraite de Fs/2; et lorsque ladite valeur accumulée appartient au quatrième domaine, ladite seconde étape produit la valeur complémentaire de Fs/2.

17. Procédé de formation d'une sous-porteuse de chrominance à conversion de bande basse selon la revendication 14, dans lequel la forme d'onde de base de ladite sous-porteuse de chrominance à conversion de bande basse est divisée en quatre domaines dans lesquels le premier domaine concerne les angles compris entre zéro et 90°, le second domaine concerne les angles compris entre 91° et 180°, le troisième domaine concerne les angles compris entre 181° et 270° et le quatrième domaine concerne les angles compris entre 271° et 360°, ladite troisième étape produit la valeur extraite de ladite table de valeurs pour les premier et second domaines et la valeur extraite de ladite table de valeurs et inversée pour les troisième et quatrième domaines.

18. Procédé de traitement d'un signal de chrominance converti en bande basse, ledit procédé servant dans un dispositif de traitement de signal de chrominance à conversion de bande basse selon l'une des revendications 1 à 11, ledit procédé comprenant :

une première étape de détermination d'une fréquence Fscu d'une sous-porteuse de chrominance à conversion de bande basse et une fréquence Fs d'un signal oscillant correspondant à une période d'une ligne de balayage horizontal et d'échantillonnage de la forme d'onde de base du signal de chrominance converti en bande basse en Fs points d'échantillonnage, chacun ayant un intervalle uniforme, à mémoriser sous la forme d'une table de valeurs ;
une seconde étape de production d'une adresse de lecture pour lire ladite table de valeurs à Fscu pour Fs signaux d'oscillation ; et
une troisième étape de production d'une valeur échantillonnée correspondant à ladite adresse de lecture à partir de ladite table de valeurs, ce par quoi les sous-porteuses de chrominance à conversion de bande basse sont produites pour Fs signaux oscillants.

19. Procédé de formation d'une sous-porteuse de chrominance à conversion de bande basse utilisant un signal oscillant de fréquence prédéterminée, ledit procédé étant utilisé dans un dispositif de traitement de signal de chrominance à conversion de bande basse selon l'une quelconque des revendications 1 à 11, ledit procédé comprenant :

une première étape de détermination d'une fréquence Fscu d'une sous-porteuse de chrominance à conversion de bande basse et une fréquence Fs du signal oscillant correspondant à une période d'une ligne de balayage horizontal et d'échantillonnage des Fscu signaux de chrominance convertis en bande basse en Fs points d'échantillonnage, chacun ayant un intervalle uniforme, à mémoriser sous la forme d'une table de valeurs ;
une seconde étape destinée à compter de manière répétitive le signal oscillant par période d'une ligne de balayage horizontal afin de constituer une adresse de lecture appliquée à ladite table de valeurs ; et
une troisième étape de production d'une valeur échantillonnée correspondant à ladite adresse de lecture à partir de ladite table de valeurs, ce par quoi les sous-porteuses de chrominance à conversion de bande basse sont formées pour Fs signaux d'oscillation.

20. Procédé de formation d'une sous-porteuse de chrominance à conversion de bande basse selon la revendication 19, dans lequel ladite seconde étape forme l'adresse dans un ordre tel que l'adresse d'une période présente de ligne de balayage horizontal désigne de manière inversée la période précédente de balayage horizontal.

21. Procédé de formation d'une sous-porteuse de chrominance à conversion de bande basse selon la revendication 20, dans lequel une adresse de départ de la période d'une première ligne de balayage horizontal est située en position 0° de la sous-porteuse de chrominance à conversion de bande basse, et ladite troisième étape produit de manière répétitive la valeur lue dans ladite table de valeurs durant la période des première et seconde lignes de balayage horizontal, et la valeur lue dans ladite table de valeurs et présentant un signe inversé pour la période des troisième et quatrième lignes de balayage horizontal.

# FIG. 1

VIDEO SIGNAL INPUT

Y.C SEPARATION

LUMINANCE SIGNAL(Y) RECORDING -AND-PROCESSING CIRCUIT

CHROMINANCE SIGNAL RECORDING -AND-PROCESSING CIRCUIT

RECORDING AMPLIFIER

RECORDING

REPRODUCING

VIDEO SIGNAL OUTPUT

LUMINANCE SIGNAL(Y) REPRODUCING -AND-PROCESSING CIRCUIT

CHROMINANCE SIGNAL REPRODUCING -AND-PROCESSING CIRCUIT

REPRODUCING AMPLIFIER

EP 0 599 663 B1

FIG. 2

CHROMINANCE SIGNAL

28
28a
28b
APC ~26
CHROMINANCE SUBCARRIER GENERATOR ~24
Fh
NTSC/PAL

20
20c COMPARATOR
Fh
20d LPF
20a VCO
20b 1/N

30
30a LPF R-Y(U)
30b LPF B-Y(V)
30c CHROMINANCE SIGNAL PROCESSOR

R-Y(U)          B-Y(V)

34 LOW-BAND CONVERTING CHROMINANCE SUBCARRIER GENERATOR
Fh
NTSC/PAL

32
32a
32b
32c

LOW-BAND CONVERTED/CHROMINANCE SIGNAL/CHROMINANCE SIGNAL

EP 0 599 663 B1

# FIG. 3

CHROMINANCE SIGNAL/
LOW-BAND CONVERTED
CHROMINANCE SIGNAL

28
28a
28b
26
APC
25a
RECORDING/
REPRODUCING
MUX
A   B
24
CHROMINANCE
SUBCARRIER
GENERATOR
Fh
NTSC/PAL

30
30a   LPF   R-Y(U)   30c
30b   LPF   B-Y(V)   CHROMINANCE
SIGNAL
PROCESSOR
R-Y(U)   B-Y(V)

32b   32
32a
32c

20
20c   COMPARATOR
Fh
20d   LPF
20a   VCO
20b   1/N

25b
RECORDING/
REPRODUCING
MUX
A   B
34
LOW-BAND
CONVERTING
CHROMINANCE
SUBCARRIER
GENERATOR
Fh
NTSC/PAL

Fs

LOW-BAND CONVERTED
CHROMINANCE CONVERTED
CHROMINANCE SIGNAL

CHROMINANCE
SIGNAL

EP 0 599 663 B1

# FIG. 4

# FIG. 5

# FIG. 6

EP 0 599 663 B1

## FIG. 7

# FIG. 8

EP 0 599 663 B1